# EUROPEAN PATENT APPLICATION

(11) **EP 4 772 985 A1**
(43) Date of publication of application: **08.07.2026**
(21) Application number: 24913295.2
(22) Date of filing: 27.09.2024
(51) Int. Cl.: G06F 3/04842, H04M 1/72445, G06F 3/04845

(54) **ELECTRONIC DEVICE FOR DETERMINING LAYOUT OF IMAGE AND ONE OR MORE VISUAL OBJECTS IN LOCK SCREEN AND METHOD THEREOF**

(30) Priority: 28.12.2023 KR 20230195851; 15.01.2024 KR 20240006365; 19.03.2024 KR 20240037867
(71) Applicant: Samsung Electronics Co., Ltd., Suwon-si, Gyeonggi-do 16677 (KR)
(72) Inventor: MOON, Yeojin, Suwon-si Gyeonggi-do 16677 (KR)
(74) Representative: HGF
(86) International application number: PCT/KR2024/014800
(87) International publication number: WO 2025/143454

(57) **Abstract**

In an electronic device according to an embodiment of the present invention, a first background image of a lock screen and a widget object corresponding to a widget of the lock screen may be simultaneously displayed in an editing screen for editing the lock screen. The first background image may include a visual object area obtained using a source image. The electronic device may receive, through the editing screen, a second input for moving the widget object. In the electronic device, the lock screen may be edited by acquiring the second background image using the source image so that, in response to the release of the second input corresponding to the widget object moved to at least partially overlap the visual object area included in the first background image, the visual object area separates from the widget object moved by the second input. The second background image may be displayed together with the widget moved in the lock screen according to the second input.

## Description

### [Technical Field]

The present disclosure relates to an electronic device for determining a layout of an image and one or more visual objects in a lock screen and method thereof.

### [Background Art]

Functions supported by a portable electronic device are increasing. Various software applications may be installed on an electronic device. An electronic device may execute a plurality of software applications substantially simultaneously based on multitasking. In order to protect privacy, an electronic device may have a state and/or a mode that restricts the execution of a software application.

The above-described information may be provided as a related art for the purpose of helping to understand the present disclosure. None of the foregoing content is asserted as prior art related to the present disclosure or used in decisions related to the prior art.

### [Disclosure]

### [Technical Solution]

An electronic device according to an example embodiment may comprise: a display, at least one processor, comprising processing circuitry, and memory, comprising one or more storage media, storing instructions. At least one processor, individually or collectively, may be configured to execute the instructions and to cause the electronic device to: receive a first input for displaying an edit screen for editing a lock screen. At least one processor, individually or collectively, may be configured to execute the instructions and to cause the electronic device to concurrently display, in the edit screen displayed in response to the first input, a first background image of the lock screen and a widget object corresponding to a widget of the lock screen. The first background image may include a visual object region obtained using a source image. The widget object may be at least partially superimposed on the first background image. At least one processor, individually or collectively, may be configured to execute the instructions and to cause the electronic device to receive, via the edit screen, a second input for moving the widget object, while concurrently displaying the first background image and the widget object. At least one processor, individually or collectively, may be configured to execute the instructions and to cause the electronic device to edit the lock screen for obtaining a second background image using the source image such that the visual object region is positioned away from the widget object moved by the second input, in response to releasing the second input corresponding to the widget object moved to at least partially superimposed on the visual object region included in the first background image. The second background image may be displayed in the lock screen, with the widget moved according to the second input. At least one processor, individually or collectively, may be configured to execute the instructions and to cause the electronic device to edit the lock screen using the first background image to be displayed in the lock screen with the widget moved according to the second input, in response to releasing the second input corresponding to the widget object moved to a location spaced apart from the visual object region included in the first background image.

In an example embodiment, a method of an electronic device including a display may be provided. The method may comprise receiving a first input for displaying an edit screen for editing a lock screen. The method may comprise concurrently displaying in the edit screen displayed in response to the first input a first background image of the lock screen and a widget object corresponding to a widget of the lock screen. The first background image may include a visual object region obtained using a source image. The widget object may be at least partially superimposed on the first background image. The method may comprise receiving, via the edit screen, a second input for moving the widget object, while concurrently displaying the first background image and the widget object. The method may comprise editing the lock screen to obtain a second background image using the source image such that the visual object region is positioned away from the widget object moved by the second input, in response to releasing the second input corresponding to the widget object moved to at least partially superimposed on the visual object region included in the first background image. The second background image may be displayed in the lock screen, with the widget moved according to the second input. The method may comprise editing the lock screen using the first background image to be displayed in the lock screen with the widget moved according to the second input, in response to releasing the second input corresponding to the widget object moved to a location spaced apart from the visual object region included in the first background image.

In an example embodiment, a non-transitory computer readable storage medium storing instructions may be provided. The instructions, when executed by at least one processor, comprising processing circuitry, of an electronic device comprising a display, individually and/or collectively, may cause the electronic device to: receive a first input for displaying an edit screen for editing a lock screen. The instructions, when executed by at least one processor, may cause the electronic device to concurrently display in the edit screen displayed in response to the first input a first background image of the lock screen and a widget object corresponding to a widget of the lock screen. The first background image may include a visual object region obtained using a source image. The widget object may be at least partially superimposed on the first background image. The instructions, when executed by at least one processor, may cause the electronic device to receive, via the edit screen, a second input for moving the widget object, while concurrently displaying the first background image and the widget object. The instructions, when executed by at least one processor, may cause the electronic device to edit the lock screen to obtain a second background image using the source image such that the visual object region is positioned away from the widget object moved by the second input, in response to releasing the second input corresponding to the widget object moved to at least partially superimposed on the visual object region included in the first background image. The second background image may be displayed in the lock screen, with the widget moved according to the second input. The instructions, when executed by at least one processor, may cause the electronic device to edit the lock screen using the first background image to be displayed in the lock screen with the widget moved according to the second input, in response to releasing the second input corresponding to the widget object moved to a location spaced apart from the visual object region included in the first background image.

An electronic device according to an example embodiment may comprise: a display, at least one processor, comprising processing circuitry, and memory, comprising one or more storage media, storing instructions. At least one processor, individually or collectively, may be configured to execute the instructions and to cause the electronic device to: display, based on a first input for changing a layout of a lock screen, an edit screen associated with the layout of the lock screen including an image and a visual object superimposed on the image, on the display. At least one processor, individually or collectively, may be configured to execute the instructions and to cause the electronic device to display, based on a second input for adjusting a location or a size of the visual object received via the edit screen, the visual object in the edit screen using the location or the size indicated by the second input. At least one processor, individually or collectively, may be configured to execute the instructions and to cause the electronic device to change a location or a size of the image in the edit screen according to a location or a size linked with the location or the size of the visual object adjusted by the second input.

In an example embodiment, a method of an electronic device comprising a display may be provided. The method may comprise, based on a first input for changing a layout of a lock screen, displaying an edit screen associated with the layout of the lock screen including an image and a visual object superimposed on the image, on the display. The method may comprise, based on a second input for adjusting a location or size of the visual object received via the edit screen, displaying the visual object in the edit screen using a location or a size indicated by the second input. The method may comprise changing a location or a size of the image in the edit screen according to a location or size linked with the location or the size of the visual object adjusted by the second input.

In an example embodiment, a non-transitory computer readable storage medium storing instructions may be provided. The instructions, when executed by at least one processor, comprising processing circuitry, of an electronic device comprising a display, individually and/or collectively, may cause the electronic device to: display, based on a first input for changing a layout of a lock screen, an edit screen associated with the layout of the lock screen including an image and a visual object superimposed on the image, on the display. The instructions, when executed by at least one processor, may cause the electronic device to display, based on a second input for adjusting a location or a size of the visual object received via the edit screen, the visual object in the edit screen using a location or a size indicated by the second input. The instructions, when executed by at least one processor, may cause the electronic device to change a location or a size of the image in the edit screen according to a location or a size linked with the location or the size of the visual object adjusted by the second input.

### [Description of the Drawings]

The above and other aspects, features and advantages of certain embodiments of the present disclosure will be more apparent from the following detailed description, taken in conjunction with the accompanying drawings, in which:
FIG. 1 is a diagram illustrating an example user interface (UI) displayed by an electronic device according to various embodiments;
FIG. 2 is a block diagram illustrating an example configuration of an electronic device according to various embodiments;
FIG. 3 is a state transition diagram of an electronic device according to various embodiments;
FIGS. 4A, 4B, 4C, and 4D are diagrams illustrating example states of an electronic device displaying an edit screen associated with a lock screen according to various embodiments;
FIG. 5 is a flowchart illustrating an example operation of an electronic device according to various embodiments;
FIGS. 6A and 6B are diagrams illustrating example states of an electronic device displaying an edit screen associated with a lock screen according to various embodiments;
FIGS. 7A, 7B, and 7C are flowcharts illustrating an example operation of an electronic device according to various embodiments;
FIG. 8 is a flowchart illustrating an example operation of an electronic device according to various embodiments;
FIGS. 9A and 9B are diagrams illustrating example states of an electronic device displaying a lock screen according to various embodiments;
FIG. 10 is a diagram illustrating example states of an electronic device displaying an edit screen according to various embodiments;
FIGS. 11A, 11B, and 11C are diagrams illustrating example states of an electronic device displaying an edit screen according to various embodiments; and
FIG. 12 is a block diagram illustrating an example electronic device in a network environment according to various embodiments.

### [Mode for Invention]

Hereinafter, various example embodiments of the present disclosure will be described in greater detail with reference to the accompanying drawings.

The various example embodiments of the present disclosure and terms used herein are not intended to limit the technology described in the present disclosure to specific embodiments, and should be understood to include various modifications, equivalents, and/or substitutes of the corresponding embodiment. In relation to the description of the drawings, a reference numeral may be used for a similar component. A singular expression may include a plural expression unless it is clearly meant differently in the context. In the present disclosure, an expression such as "A or B", "at least one of A and/or B", "A, B or C", or "at least one of A, B and/or C", and the like may include all possible combinations of items listed together. Expressions such as "first", "second", "1st" or "2nd", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present disclosure may include a unit configured with hardware or firmware, or any combination thereof, and may be used interchangeably with terms such as logic, block, component, or circuit, and the like. The module may be an integrally configured component or a minimum unit or part thereof that performs one or more functions. For example, a module may be configured with an application-specific integrated circuit (ASIC).

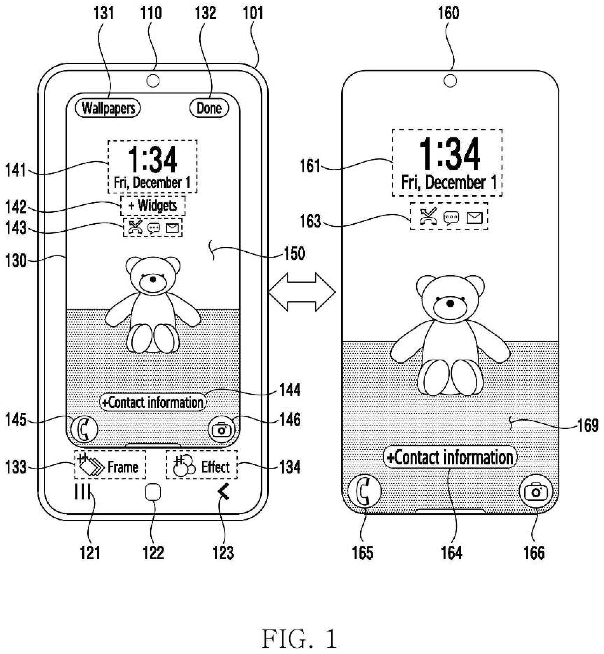

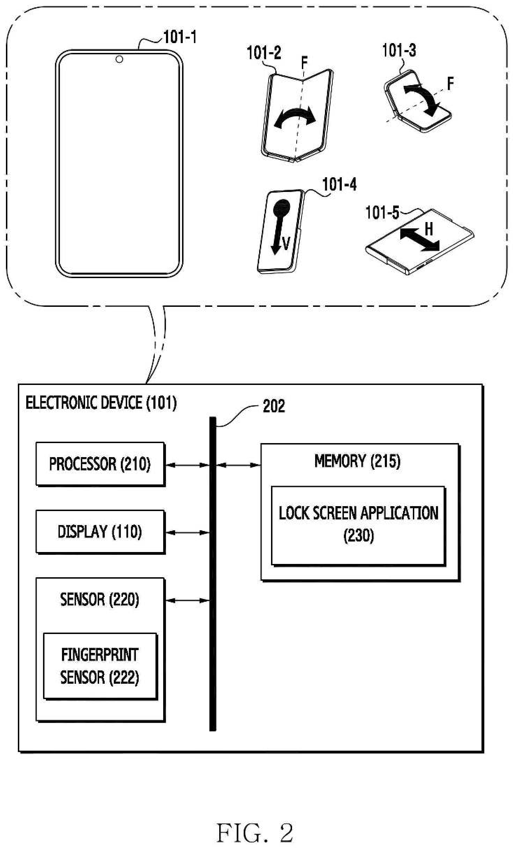

FIG. 1 is a diagram illustrating an example user interface (UI) displayed by an electronic device 101 according to various embodiments. Referring to FIG. 1, the electronic device 101 having a shape of a mobile phone is illustrated. The electronic device 101 may have various forms of form factors, such as, for example, and without limitation, a smartphone, a laptop personal computer (PC), a tablet PC, a head-mounted display (HMD) device, a headset (or a headphone), a watch, and other similar computing devices (not illustrated). The electronic device 101 may be referred to as a mobile device, a user terminal, a user equipment (UE), a multi-function device, a portable communication device, and/or a portable device. The form factor of the electronic device 101 is not limited to the example form factors illustrated in FIG. 1. For example, the electronic device 101 may be included as an electronic control unit (ECU) in a vehicle (e.g., an electric vehicle (EV)). For example, the electronic device 101 may have a form factor wearable by a user, such as the HMD device and/or the watch, or may have a form factor implantable on a body part of the user. The disclosure is not limited thereto, and the electronic device 101 may have a form factor of an earbud and/or an earphone. An example of a hardware configuration included in the electronic device 101 will be described in greater detail below with reference to FIG. 2.

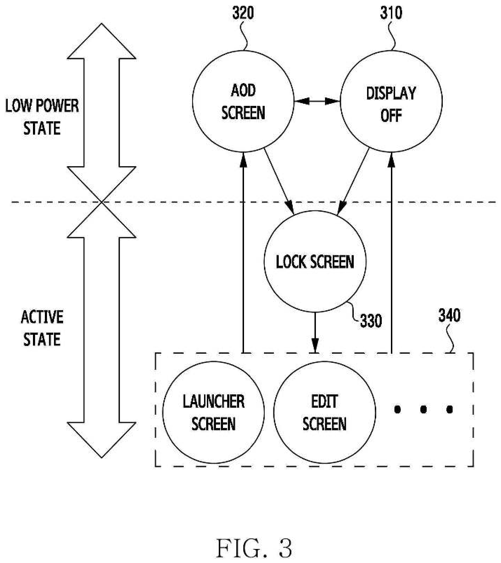

The electronic device 101 according to an embodiment may at least partially (or at least temporarily) restrict access to information (e.g., a photo, a video, an image, text, contact information, payment information, biometric information, and/or other information generated by a software application executed in the electronic device 101) stored in the electronic device 101 to protect privacy. A state (or mode) of the electronic device 101 that restricts the access to the information stored in the electronic device 101 may be referred to as a lock state (or a lock mode). Different states of the electronic device 101 including the lock state and the operation of the electronic device 101 in the above states will be described with reference to FIG. 3.

Referring to FIG. 1, a lock screen 160, which is a screen displayed on a display 110 of the electronic device 101 while operating in the lock state, is illustrated. While displaying the lock screen 160, execution of another function other than the function associated with the lock screen 160 may be restricted. For example, based on the authentication of the user of the electronic device 101, the electronic device 101 may conditionally execute the other function. The lock screen 160 may include a visual object (e.g., visual objects 161, 163, 164, 165, and 166) associated with at least one function allowed to be executed in the lock state, among various functions supported by the electronic device 101.

For example, the electronic device 101 may display a visual object 161 (or a clock widget) representing the current time calculated by the electronic device 101. The visual object 161 may be displayed based on the execution of a software application that provides a function associated with time, such as a clock application. In terms of including the clock widget, the lock screen 160 may be referred to as a clockface (or face).

For example, the electronic device 101 may display a visual object 163 representing at least one notification message generated by the electronic device 101 in the lock state. The visual object 163 may be displayed based on the execution of a system service and/or a system application executed by the electronic device 101 for management of a push message and/or a notification message, such as a notification center. A visual object having a shape that is updated by the software application running on the electronic device 101, such as the visual objects 161 and 163, may be referred to as a user interface (UI) object, a widget, a widget object, a gadget object, and/or a gadget.

For example, the electronic device 101 may display a visual object 165 for executing a software application for a phone call. For example, the electronic device 101 may display a visual object 164 mapped to a function of performing an emergency call. The visual objects 164 and 165 may be mapped to a software application that provides a function associated with a phone call, such as a call application. For example, the electronic device 101 may display a visual object 166 mapped to a function of controlling the camera. The visual object 166 may be mapped to a software application that provides a function associated with a camera of the electronic device 101, such as a camera application.

Referring to FIG. 1, the electronic device 101 may display an image 169 together with the visual objects 161, 163, 164, 165, and 166 within the lock screen 160 occupying the entire display area of the display 110. The electronic device 101 may display the visual objects 161, 163, 164, 165, and 166 superimposed on the image 169. Although the operation of the electronic device 101 associated with the image 169 is illustrated, the disclosure is not limited thereto. For example, the electronic device 101 may display a video, one or more three-dimensional graphic objects, and/or text in place of the image 169. The operation of the electronic device 101 described with reference to FIGS. 1 to 12 may be similarly performed or applied not only to the image 169, but also to other media content (e.g., the video and/or the one or more three-dimensional graphic objects) displayed as disposed below the visual objects 161, 163, 164, 165, and 166. The image 169 may be referred to as a background image and/or a wallpaper.

In another state different from the lock state, the electronic device 101 may provide a function for editing the lock screen 160. Referring to FIG. 1, an edit screen displayed on the display 110 for editing the lock screen 160 is illustrated. The electronic device 101 may display an edit screen based on an input for changing or customizing a layout of the lock screen 160. The layout of the lock screen 160 may be associated with a positional relationship of the image 169 and/or the visual objects 161, 163, 164, 165, and 166 viewed via the lock screen 160.

Referring to FIG. 1, the electronic device 101 may display visual objects 121, 122, and 123 for switching or moving to another screen different from the edit screen. Although an embodiment in which the visual objects 121, 122, and 123 are displayed along the bottom edge of the display 110 is illustrated, the disclosure is not limited thereto. For example, the visual object 121 referred to as a recent application (and/or recent apps) button may be mapped to a function of displaying an execution screen selected within a list to provide the list of one or more execution screens displayed on the display 110. For example, the visual object 122 referred to as a home button may be mapped to a function of displaying a preset screen referred to as a home screen (or launcher screen). For example, the visual object 123 referred to as a back button may be mapped to a function of moving to the execution screen displayed prior to the edit screen being displayed on the display 110.

Within the example edit screen of FIG. 1, the electronic device 101 may display a preview area 130 for providing a preview for the lock screen 160. Via the preview area 130 that partially occupies the display area of the display 110, the electronic device 101 may guide or provide the appearance of the lock screen 160 changed by the edit screen. Within the preview area 130, the electronic device 101 may display an image 150 corresponding to the image 169 to be included in the lock screen 160. The electronic device 101 may display visual objects 141, 142, 143, 144, 145, and 146 superimposed on the image 150 within the preview area 130.

In an embodiment, the visual objects 141, 142, 143, 144, 145, and 146 may be displayed for addition, deletion, and/or change of an executable object to be displayed as superimpose on the image 169 within the lock screen 160. For example, the visual object 141 may be displayed for deleting and/or changing (e.g., changing the properties of the visual object 161) the visual object 161 included in the lock screen 160. For example, the visual object 142 may be displayed to add a widget at a position of the lock screen 160 corresponding to the visual object 142. For example, the visual object 143 may be displayed to add, delete, and/or change the visual object 163 included in the lock screen 160. For example, the visual object 144 may be displayed for deleting and/or changing of the visual object 164 within the lock screen 160. For example, the visual object 145 may be displayed for deleting and/or changing of the visual object 165 within the lock screen 160. For example, the visual object 146 may be displayed for deleting and/or changing of the visual object 166 within the lock screen 160. Using the edit screen that includes the preview area 130, the electronic device 101 may provide the user with a what you see is what you get (WYSIWYG) experience associated with the lock screen 160.

Within the example edit screen of FIG. 1, the electronic device 101 may display a visual object 131 mapped to a function for changing the image 150 in the preview area 130. In response to an input for selecting the visual object 131 that includes preset text, such as wall paper, the electronic device 101 may display a list of one or more images (or one or more videos) stored in the electronic device 101 or provided from an external electronic device (e.g., a server associated with the lock screen 160) connected to the electronic device 101. In response to an input for selecting an image via the list, the electronic device 101 may change or replace the image 150 displayed in the preview area 130 with another image corresponding to the input.

Within the edit screen of FIG. 1, the electronic device 101 may display a visual object 133 mapped to a function for editing a frame (or outline) of the image 150 in the preview area 130. Within the edit screen of FIG. 1, the electronic device 101 may display a visual object 134 mapped to a function for applying a visual effect to the image 150 in the preview area 130. The function of applying a visual effect to the image 150 may include the operation of adjusting a color, saturation, and/or brightness of the image 150. The function of applying a visual effect to the image 150 may include the operation of coupling or superimposing a preset image referred to as a sticker on the image 150.

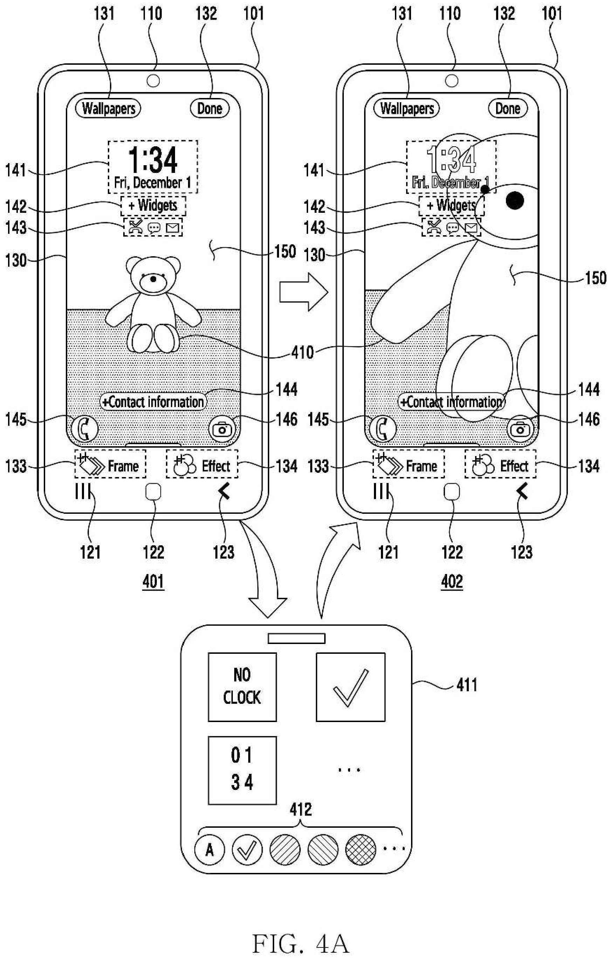

The electronic device 101 according to an embodiment may display an edit screen associated with the layout of the lock screen 160 including the image 169 and the visual object (e.g., the visual objects 161, 163, 164, 165, and 166) superimposed on the image 169, on the display 110. The electronic device 101 may receive a second input for adjusting a position or size of the visual object via the edit screen. In response to the second input, the electronic device 101 may display a visual object (e.g., the visual objects 141, 142, 143, 144, 145, and 146) within the edit screen using the position or size indicated by the second input. According to a position and/or a size linked with the position and/or the size of the visual object adjusted by the second input, the electronic device 101 may change a position and/or a size of an image (e.g., the image 150) in the edit screen. The operation of the electronic device 101 associated with the second input will be described in greater detail below with reference to FIGS. 4A to 4D, 5, 10, and 11A to 11C.

The electronic device 101 may receive a third input for adjusting a position or size of an image (e.g., the image 169) of the lock screen via the edit screen. In response to the third input, the electronic device 101 may display an image (e.g., the image 150) within the edit screen using a position or size indicated by the third input. According to a position and/ or size linked with a location and/or a size of the image 150 adjusted by the third input, the electronic device 101 may change a position and/or size of a visual object (e.g., at least one of the visual objects 141, 142, 143, 144, 145, and 146) in the edit screen.

Within the example edit screen of FIG. 1, the electronic device 101 may display a visual object 132 mapped to a function for storing the layout of the lock screen 160 viewed via the preview area 130. An input indicating a selection of the visual object 132 may be referred to as an input for storing the layout of the lock screen 160. In response to an input for selecting the visual object 132, the electronic device 101 may store a positional relationship and/or a layout of the image 150 and one or more visual objects (e.g., the visual objects 141, 142, 143, 144, 145, and 146) displayed via the preview area 130. Using the stored layout, the electronic device 101 may display the lock screen 160.

For example, after receiving a fourth input for storing the layout adjusted by the second input and/or the third input via the edit screen, when the state of electronic device 101 is switched to a preset state for displaying the lock screen 160, the electronic device 101 may display the lock screen 160 having the stored layout on display 110. For example, the position and/or size of the image 169 and the visual objects 161, 163, 164, 165, and 166 within the lock screen 160 may correspond to the position and/or size of the image 150 and the visual objects 141, 143, 144, 145 and 146 within the edit screen.

According to an embodiment, the electronic device 101 may recommend a layout of the lock screen 160. While displaying the edit screen, in response to an input of adjusting the positions and/or sizes of visual objects 141, 142, 143, 144, 145, and 146 associated with one or more widgets to be displayed on the lock screen 160, the electronic device 101 may change the position and/or size of the image 150 as well as the visual object corresponding to the input.

For example, in response to an input for changing the position and/or size of the visual object 141 corresponding to the visual object 161 in the lock screen 160, the electronic device 101 may move, enlarge, or reduce another visual object (e.g., the visual objects 142, 143, 144, 145, and 146) that is different from the visual object 141, and/or the image 150. For example, in response to an input adjusting properties (e.g., a font, color, and/or size of text included in the visual object 161) of the visual object 161 in the lock screen 160, the electronic device 101 may change a position, size, and/or color of another visual object and/or the image 150, along with changing the shape of the visual object 161 according to the properties.

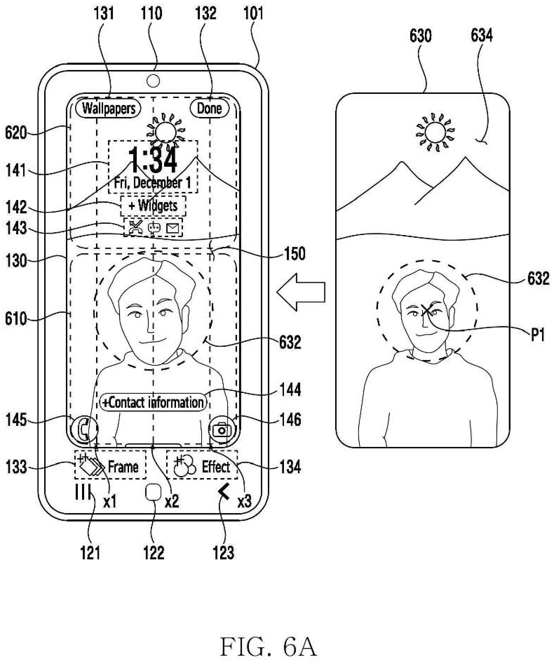

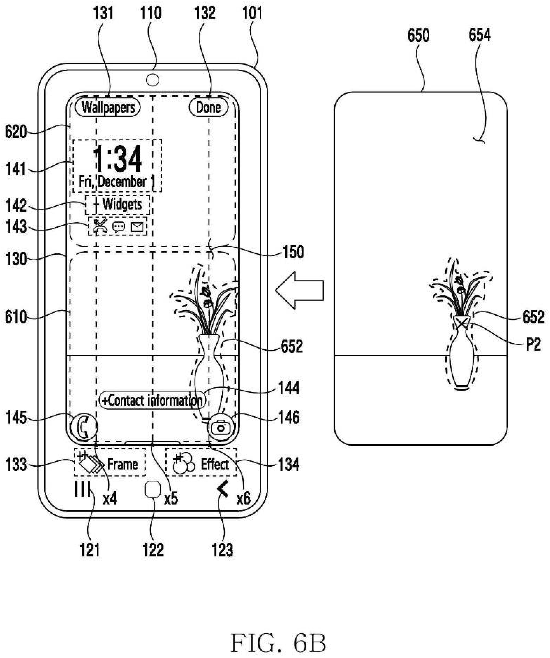

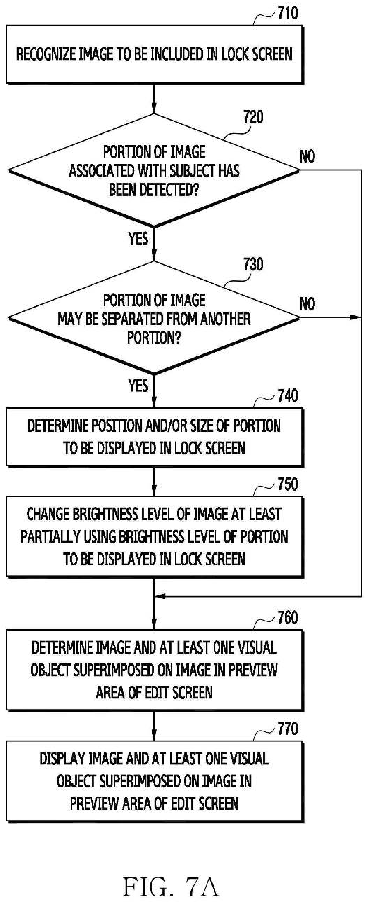

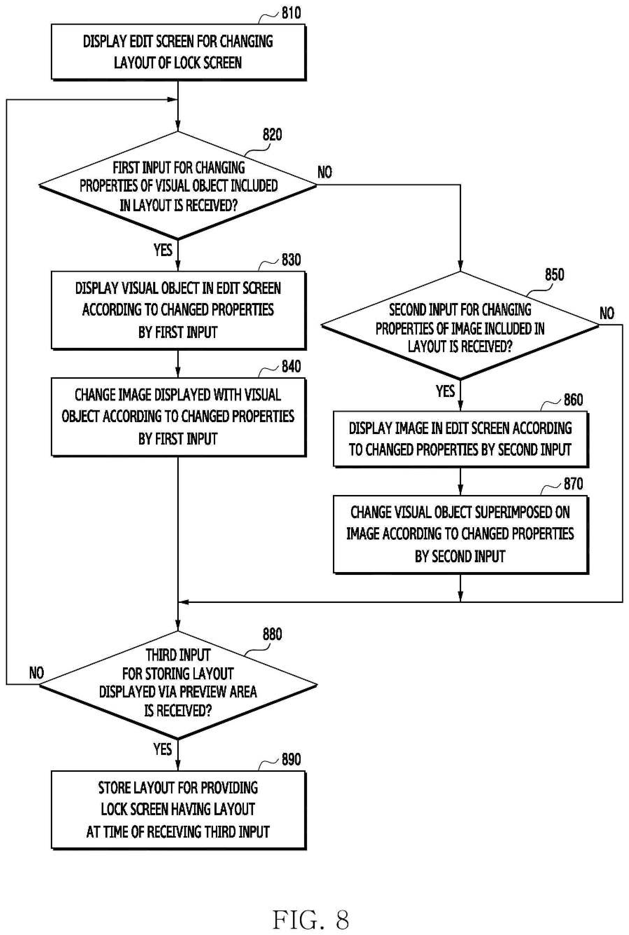

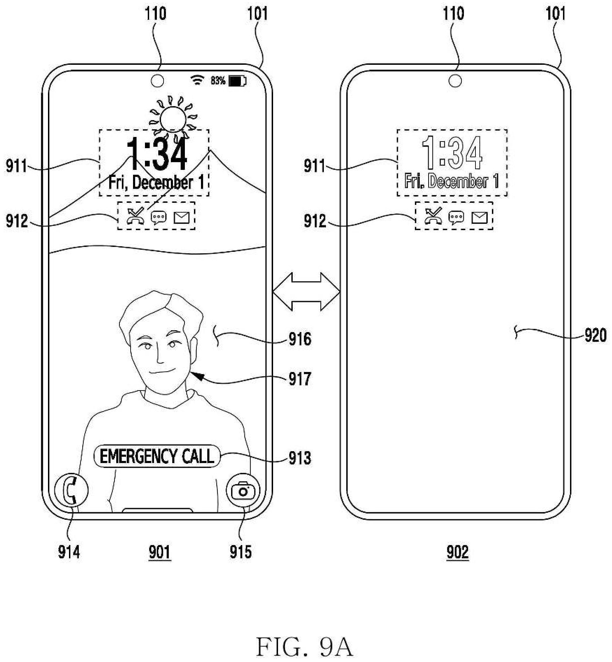

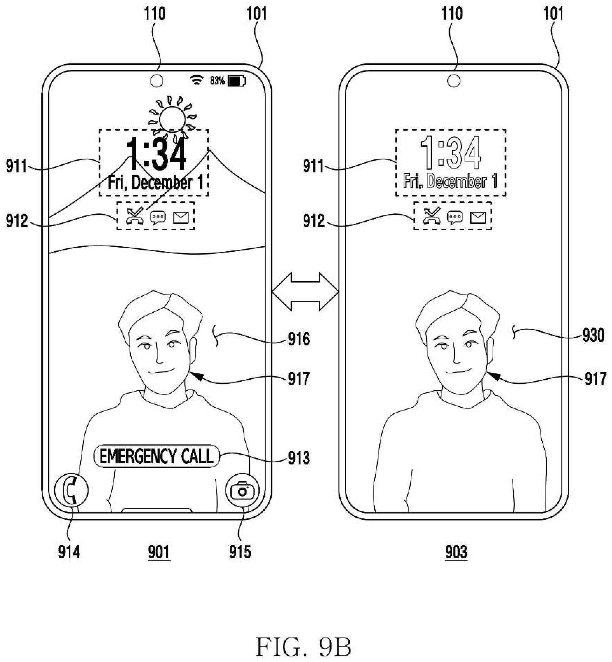

For example, in response to an input for changing the image 150 in the lock screen 160, the electronic device 101 may replace the image 150 in the preview area 130, and change the properties (e.g., the position, size, color, and/or font) of the visual objects 141, 142, 143, 144, 145, and 146 superimposed on the image 150. The example operation of the electronic device 101 receiving an input associated with the image 150 will be described in greater detail below with reference to FIGS. 6A, 6B, and 7A to 7C. The operation of the electronic device 101 receiving an input for changing the layout of the lock screen 160 displayed via the preview area 130 via the edit screen will be described in greater detail below with reference to FIG. 8. An example of the lock screen 160 displayed by the electronic device 101 that has performed the operations of FIGS. 1 to 8 will be described in greater detail below with reference to FIGS. 9A and/or 9B.

As described above, the electronic device 101 according to an embodiment may execute a function of recommending or automatically changing the layout of the lock screen 160. For example, the electronic device 101 may guide or display an optimized layout of widgets (e.g., the visual objects 161, 163, 164, 165, and 166) and the image 169 included in the lock screen 160. The layout may include a positional relationship between the widget and the image 169, as well as a relationship between colors, brightness, and/or saturation of the widget and/or the image 169. The electronic device 101 may change or recommend the layout of the lock screen 160 in real time in response to an input for changing the layout of the lock screen 160. For example, the widget and/or the image 169 visualized via the lock screen 160 may have a position, size, and/or color that are linked with each other.

Hereinafter, with reference to FIG. 2, an example hardware configuration of the electronic device 101 of FIG. 1 will be described in greater detail.

FIG. 2 is a block diagram illustrating an example configuration of an electronic device 101 according to various embodiments. The electronic device 101 of FIG. 1 may include the electronic device 101 of FIG. 2. The electronic device 101 according to an embodiment may include at least one of a processor (e.g., including processing circuitry) 210, a memory 215, a display 110, and/or a sensor 220. The processor 210, the memory 215, the display 110, and/or the sensor 220 may be electronically and/or operably coupled with each other by an electronical component such as a communication bus 202. Hereinafter, that the electronical components being operably coupled may refer, for example, to a direct or indirect connection between the electronical components being established, either wired or wireless, so that a second electronical component is controlled by a first electronical component among the electronical components. Although illustrated based on different blocks, the disclosure is not limited thereto, and a portion (e.g., at least a portion of the processor 210 and the memory 215) of the electronical components of FIG. 2 may be included in a single integrated circuit such as a system on a chip (SoC). The type and/or number of the electronical components included in the electronic device 101 is not limited to those illustrated in FIG. 2. For example, the electronic device 101 may include only a portion of the electronical components illustrated in FIG. 2.

The processor 210 of the electronic device 101 according to an embodiment may include a circuit (e.g., a processing circuitry) for processing data based on one or more instructions. The circuit for processing data may include, for example, an arithmetic and logic unit (ALU), a floating point unit (FPU), a field programmable gate array (FPGA), a central processing unit (CPU), a graphic processing unit (GPU), a neural processing unit (NPU), and/or an application processor (AP). For example, the number of the processor 210 may be one or more. A processing circuit of the processor that loads (or fetches) an instruction and performs a calculation corresponding to the loaded instruction may be called or referred to as a core circuit (or core). For example, the processor may have a structure of a multi-core processor that includes a plurality of core circuits, such as a dual core, a quad core, a hexa core, or an octa core. In an embodiment having the structure of a multi-core processor, core circuits included in the processor 210 may be classified into a big core circuit (or a performance core circuit) that process instructions relatively quickly, and a little core circuit (or an efficiency core circuit) that process instructions relatively slowly, according to speed (e.g., clock frequency), power consumption, and/or cache memory. The function and/or operation described with reference to the present disclosure may be performed individually and/or collectively by one or more processing circuits included in the processor 210. The processor 210 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The memory 215 of the electronic device 101 according to an embodiment may include a circuit for storing data and/or instruction input and/or output to the processor 210. For example, the memory 215 may include one or more storage media that store information and/or instructions. The memory may include, for example, volatile memory such as random-access memory (RAM) and/or non-volatile memory such as read-only memory (ROM). The non-volatile memory may be referred to as storage. The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, solid state drive (SSD), and embedded multi-media card (eMMC). The processor 210 of the electronic device 101 may perform the function and/or operation indicated by the instructions by executing the instructions of the memory 215 in the electronic device 101. For example, in case that the electronic device 101 includes at least one processor, the at least one processor may be configured to execute the instructions collectively or individually.

Referring to FIG. 2, the electronic device 101 may include the display 110. The disclosure is not limited thereto, and the display 110 may be omitted according to a form factor of the electronic device 101. The display 110 of the electronic device 101 may output visualized information to a user. For example, the display 110 may output visualized information to the user by being controlled by a controller such as the graphic processing unit (GPU) and/or the processor 210. The display 110 may include a liquid crystal display (LCD), a plasma display panel (PDP), and/or one or more light emitting diodes (LEDs). The LED may include an organic LED (OLED). The display 110 may include a flat panel display (FPD) and/or electronic paper. The disclosure is not limited thereto, and the display 110 may have at least a partially curved shape or a deformable shape. The display 110 having a deformable shape may be referred to as a flexible display.

Referring to FIG. 2, various example appearances of the electronic device 101 classified according to a shape of the display 110 are illustrated. An electronic device 101-1 of a first appearance may include the display 110 of a rectangular and non-deformable shape. An electronic device 101-2 of a second appearance may include a flexible display having a width longer than a height, and may include a folding axis F formed along a height direction of the flexible display. An electronic device 101-3 of a third appearance may include a flexible display having a width shorter than a height, and may include a folding axis F formed along a width direction of the flexible display. An electronic device 101-4 of a fourth appearance and/or an electronic device 101-5 of a fifth appearance may include a flexible display that is insertable into a housing or extractable from the housing. The electronic device 101-4 of the fourth appearance may include a flexible display having a height longer than a width, and may include a flexible display that is insertable into the housing along a direction V of the height. The electronic device 101-5 of the fifth appearance may include a flexible display having a height shorter than a width, and may include a flexible display that is extractable from the housing along a direction H of the width.

In an embodiment, the electronic device 101 may include a sensor (e.g., a touch sensor panel (TSP)) for detecting an external object (e.g., a finger of the user) on the display 110. For example, using the TSP, the electronic device 101 may detect an external object that is in contact with the display 110 or floating on the display 110. In response to detecting the external object, the electronic device 101 may execute a function associated with a specific visual object corresponding to a position of the external object on the display 110 among visual objects displayed on the display 110.

The sensor 220 of the electronic device 101 according to an embodiment may include various circuitry and generate electrical information that may be processed by the processor 210 and/or the memory 215 from non-electronic information associated with the electronic device 101. For example, the sensor 220 may include a global positioning system (GPS) sensor for detecting a geographic location of the electronic device 101. In addition to the GPS method, the sensor 220 may generate information indicating the geographic location of the electronic device 101 based on a global navigation satellite system (GNSS) such as, for example, Galileo and Beidou (compass). The information may be stored in the memory 215, processed by the processor 210, and/or transmitted to another electronic device distinct from the electronic device 101 via a communication circuit.

The sensor 220 is not limited to the above, and may include an image sensor, an illuminance sensor, a proximity sensor, an inertial measurement unit (IMU) and/or a ToF sensor for detecting an electromagnetic wave including light. The IMU may include at least one of an acceleration sensor, a gyro sensor, and/or a geomagnetic sensor. Referring to FIG. 2, as an example of the sensor 220, a fingerprint sensor 222 is illustrated. The processor 210 may obtain information (e.g., a two-dimensional image with respect to the fingerprint) on a pattern (e.g., a path, trajectory, and/or pattern of valley and ridge) of a fingerprint formed on a body part (e.g., a fingertip of the finger) in contact with the fingerprint sensor 222, from the fingerprint sensor 222. Since a person has a unique fingerprint, the processor 210 may execute a function of authenticating the user using the information obtained from the fingerprint sensor 222. In order to authenticate the user, the electronic device 101 may include a sensor configured to obtain biometric information of the user, such as the fingerprint sensor 222. For example, the electronic device 101 may include an iris sensor and/or a time-of-flight (ToF) sensor configured to obtain a three-dimensional shape of a face.

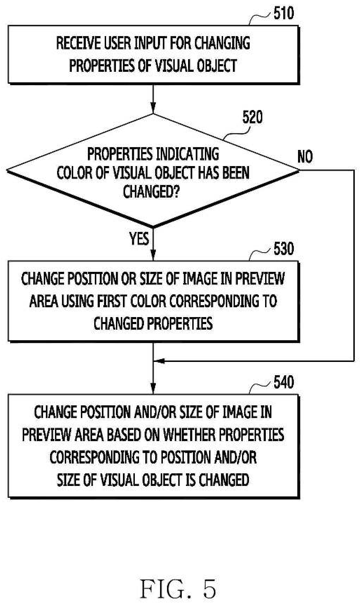

In an embodiment, in the memory 215 of the electronic device 101, one or more instructions (or commands) indicating the calculation and/or operation to be performed by the processor 210 on data may be stored. A set of one or more instructions may be referred to as firmware, operating system, process, routine, sub-routine, program, and/or software application (hereinafter, application). For example, the electronic device and/or the processor may perform at least one of the operations of FIG. 5, 7A to 7C, and/or 8 when a set of a plurality of instructions distributed in a form of an operating system, firmware, driver, and/or application is executed. Hereinafter, the application being installed in the electronic device may refer, for example, to one or more instructions provided in the form of the application being stored in the memory of the electronic device, and the one or more applications are stored in a format (e.g., a file with a preset extension by the operating system of the electronic device) that is individually and/or collectively executable by at least one processor (e.g., the processor 210) of the electronic device.

Referring to FIG. 2, a lock screen application 230 may be installed in the memory 215 of the electronic device 101. The lock screen application 230 and/or instructions (e.g., a package file in which instructions are stored) included in the lock screen application 230 may be stored in a non-transitory computer-readable storage medium, or may be published via a network (e.g., the Internet). The disclosure is not limited thereto, and the lock screen application 230 may be installed in the memory 215 as at least a portion of the operating system of the electronic device 101.

The lock screen application 230 may include information indicating that the software application is executable in a lock state. The information may be stored in metadata (e.g., metadata stored in a file with the name of androidmanifest.xml) of the lock screen application 230. The information may include preset text and/or a flag indicating that the lock screen application 230 is executable in the lock state. When switching to the lock state, the processor 210 may display the lock screen (e.g., the lock screen 160 of FIG. 1) on the display 110 by executing the lock screen application 230 including the information in metadata. The processor 210, which has executed the lock screen application 230 in the lock state, may display the lock screen on the display 110. In a state different from the lock state, the processor 210, which has executed the lock screen application 230, may display an edit screen for changing a layout of the lock screen.

In an embodiment, the lock state may be associated with a state of hardware (e.g., the processor 210) included in the electronic device 101. Hereinafter, with reference to FIG. 3, different states of the electronic device 101 and/or the processor 210 will be illustrated.

FIG. 3 illustrates a state transition diagram of an electronic device according to an embodiment. The electronic device 101 of FIGS. 1 to 2, and/or the processor 210 of FIG. 2 may be switched to any one of the states described with reference to FIG. 3.

Referring to FIG. 3, a state of an electronic device may be classified into a low power state and an active state according to a state of a processor (e.g., the processor 210 of FIG. 2). The disclosure is not limited thereto, and the state of the electronic device may further include a state in which the electronic device and/or the processor consume power below standby power, or substantially does not consume power, such as an inactive state. The low power state of the electronic device may refer, for example, to the processor of the electronic device being turned off, receives a power signal having a voltage less than a preset voltage, or that a portion of the processor (e.g., a portion of the processor referred to as a core circuit and/or a processing circuit) is deactivated. The active state of the electronic device may refer, for example, to the processor of the electronic device being turned on, receives a power signal having a voltage greater than or equal to the preset voltage, or that the portion of the processor is activated. The low power state may be referred to as an off state and/or a sleep state. The active state may be referred to as an on state, a wake-up state, and/or a high-power state. The active state may include an idle state.

Referring to FIG. 3, the lock state of the electronic device according to an embodiment may include at least one of a state 330 of displaying a lock screen (e.g., the lock screen 160 of FIG. 1), a state 320 of displaying an always-on-display (AOD) screen, and/or a state 310 in which a display (e.g., the display 110 of FIGS. 1 to 2) of the electronic device is deactivated. In the states 310, 320, and 330, the electronic device may block access to information stored in the electronic device and/or execution of a software application of the electronic device without authentication for the user.

According to whether the AOD function is activated, the electronic device may switch to the state 320 that displays the AOD screen. The AOD function may cause the electronic device to continuously maintain the activation of the display while the electronic device is turned on in order to reduce the frequency of switching to the active state. While the AOD function is being executed, the electronic device operating in a low power state may display the AOD screen including one or more widgets (e.g., a clock widget such as the visual object 161 of FIG. 1) to reduce an unnecessary input to switch the state of the processor to the active state. In case that the display is covered and/or obscured by an external object within the state 320 displaying the AOD screen, the electronic device may switch to the state 310.

In at least one of the states 310 and 320 included in the low power state, the electronic device may receive an input for switching the state of the processor to the active state. The input may be detected by a gesture of pressing a button (e.g., a power button, a button for adjusting the volume, and/or a button to which one or more preset functions are mapped) exposed via a housing of the electronic device. The input may be detected by a gesture of tapping the display of the electronic device. The input may be detected by an utterance including a preset keyword. The input may be detected by an action of moving and/or rotating the electronic device. The electronic device that has received the input may switch from at least one of the states 310 and 320 to the state 330 that displays the lock screen.

Within the state 330, the electronic device may display a lock screen (e.g., the lock screen 160 of FIG. 1) occupying the entire display. While displaying the lock screen, the electronic device may visualize information to which access is permitted while displaying the lock screen using one or more widgets included in the lock screen. A layout of the lock screen may be changed by the operation of the electronic device described with reference to FIGS. 1 to 2.

In the state 330 of displaying the lock screen, the electronic device may perform the operation for authentication. For example, in an embodiment including a fingerprint sensor (e.g., the fingerprint sensor 222 of FIG. 2) disposed on a second layer below a first layer where the display is disposed, the electronic device may obtain information from the fingerprint sensor in response to detecting an external object (e.g., the fingertip of the finger) in contact with a portion of the display superimposed with the fingerprint sensor. By comparing information obtained from the fingerprint sensor with information previously registered in the electronic device, the electronic device may authenticate a user of the external object (e.g., a user currently using the electronic device). The position of the fingerprint sensor is not limited to the above example, and for example, the fingerprint sensor may be disposed on another side (e.g., side surface and/or rear surface) different from a front side of the electronic device on which the display is disposed. For example, the fingerprint sensor may be integrated with a specific button (e.g., a power button) of the electronic device and may obtain information on the fingertip in contact with the surface of the specific button.

In an embodiment, within the state 330 of displaying the lock screen, the electronic device may obtain biometric information associated with a face and/or eyes of the user facing a camera and/or a ToF sensor by activating the camera and/or the ToF sensor. The electronic device may authenticate the user by comparing the biometric information with biometric information previously registered in the electronic device. The camera and/or the ToF sensor may be disposed on the front side on which the display of the electronic device is disposed, toward an external environment. Within the state 330, in case that the authentication of the user repeatedly fails, the electronic device may increase the interval for authenticating the user or request additional information for authentication.

Although the operation of the electronic device for authenticating the user using biometric information has been described, the disclosure is not limited thereto. The electronic device may, within the state 330, in response to a preset gesture (e.g., a swipe gesture moving along a vertical direction of the display), display other screen for receiving a password and/or a personal identification number (PIN). By comparing the password and/or PIN received via the other screen with the previously registered password and/or PIN, the electronic device may authenticate the user.

Within the state 330, based on the authentication of the user, the electronic device may switch to an unlock state 340. Within the state 340, the electronic device may display various screens on the display. For example, the electronic device may display a launcher screen (or home screen) configured to provide a list of software applications stored in the electronic device on the display. For example, the electronic device may display an edit screen for changing the layout of the lock screen displayed within the state 330 on the display. Within the state 340, in response to an input for executing a software application installed in the electronic device, the electronic device may execute a software application corresponding to the input and display an execution screen provided from the executed software application on the display.

Referring to FIG. 3, from the state 340 in the active state, the electronic device may switch to a low power state based on a preset condition. For example, in response to a gesture of pressing a preset button (e.g., the power button) of the electronic device, the electronic device may switch from the state 340 to at least one of the states 310, 320, and 330 in the low power state and/or the lock state. For example, within the state 340, in case that any user input (e.g., a touch input on the display) is not received for a period exceeding a preset period (e.g., about 10 seconds), the electronic device may switch to at least one of the states 310, 320, and 330 in the low power state and/or the lock state.

Although an embodiment that requires switching to the state 330 associated with the lock screen in order to enter the state 340 has been described, the disclosure is not limited thereto. For example, according to whether a function of displaying the lock screen is activated, the electronic device may switch to the state 330. When activating the function of displaying the lock screen, the electronic device may obtain, or register, information (e.g., biometric information on the fingerprint, iris, and/or face, and/or password, and/or PIN) necessary for authentication from the user. In case that the function of displaying the lock screen is not activated (or prior to activating the function of displaying the lock screen), the electronic device may directly switch from any one of the states 310 and 320 to the state 340 in response to an input for switching the state of the processor to the active state.

As described above, when the state of at least one processor included in the electronic device is switched to a preset state (e.g., the state 330) for displaying the lock screen, the electronic device according to an embodiment may display the lock screen having a layout stored in the electronic device on the display. Hereinafter, with reference to FIGS. 4A to 4D, the example operation of the electronic device receiving an input for editing the layout in the edit screen associated with the lock screen will be described.

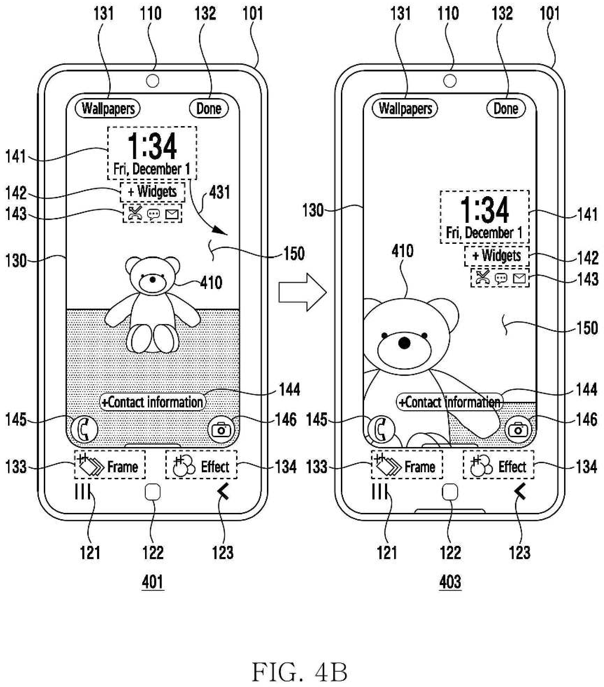

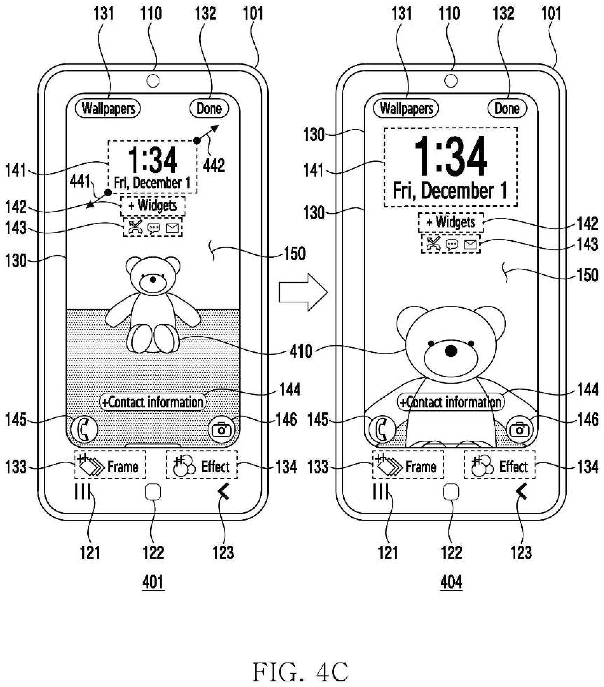

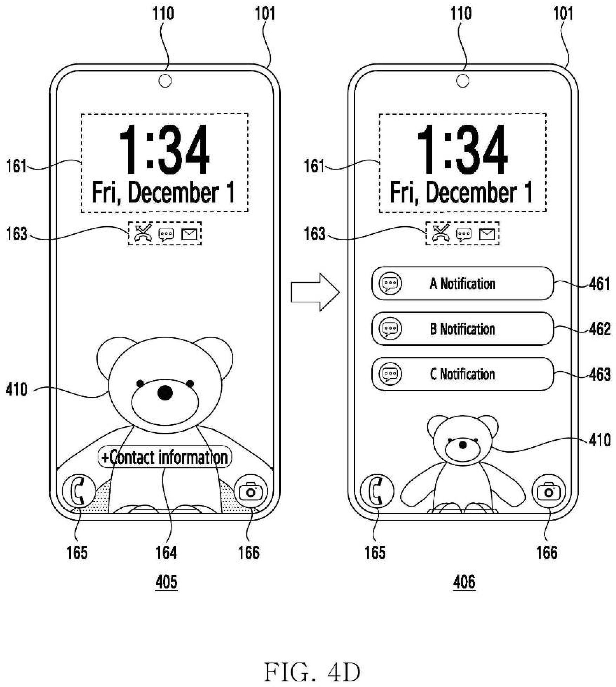

FIGS. 4A, 4B, 4C, and 4D illustrate example states 401, 402, 403, and 404 of an electronic device 101 displaying an edit screen associated with a lock screen. The electronic device 101 of FIGS. 1 to 2 and/or the processor 210 of FIG. 2 may perform the operation of the electronic device 101 described with reference to FIGS. 4A to 4D.

Referring to FIGS. 4A to 4D, are diagrams illustrating example states 401, 402, 403, and 404 of the electronic device 101 displaying an edit screen on a display 110 according to various embodiments. The electronic device 101 may display example screens of FIGS. 4A, 4B, 4C and 4D (which may be referred to as FIGS. 4A to 4D) while executing the lock screen application 230 of FIG. 2 in an active state (e.g., the state 340 of FIG. 3).

In an embodiment, the electronic device 101 may display the edit screen based on an input for changing a layout of the lock screen. The input may be received in a state of executing a preset software application, such as a setting application, configured to adjust a setting value and/or preference of the electronic device 101. For example, the input may include an input for selecting a button, menu, and/or option associated with the lock screen within a screen provided by the preset software application. For example, the input may include an input for selecting a button, menu, and/or option displayed by a preset gesture (e.g., a long-touch gesture by an external object in contact with the display for more than about 1.5 seconds) on the lock screen.

Referring to FIG. 4A, a state 401 of displaying the edit screen on the display 110 is illustrated. The state 401 of FIG. 4A may include the state of FIG. 1 for displaying the edit screen on the display 110. By performing object recognition with respect to an image 150 displayed on a preview area 130, the electronic device 101 may detect or determine a portion 410 associated with a subject (e.g., a teddy bear) within the image 150. The object recognition may be performed using an algorithm that detects a subject and/or a foreground object within the image 150, such as a photograph. The algorithm may include a computational model for neural activity of animals including humans, such as a convolutional neural network (CNN) and/or a long-short term memory (LSTM). The computational model may be referred to as an artificial neural network and/or a neural network. The portion 410 may be referred to as a visual object region.

In an embodiment, the object recognition with respect to the image 150 may be completed prior to the state 401 of displaying the edit screen. For example, the electronic device 101 may obtain a result of performing the object recognition from metadata associated with the image 150. Within the metadata, the electronic device 101 may check or identify data indicating a position, size, and/or shape of the portion 410 of the image 150 as a result. Together with the data, the electronic device 101 may check or identify data indicating a category, type, and/or class of a subject associated with the portion 410 from metadata.

Referring to FIG. 4A, within the state 401 of displaying the edit screen including the preview area 130 that guides the layout of the lock screen, the electronic device 101 may receive an input for changing the properties of a widget to be displayed on the lock screen. For example, the electronic device 101 may receive an input associated with a visual object 141 corresponding to a clock widget. The input may be performed by a user to change the properties of the clock widget. In the state 401 of displaying the edit screen, the electronic device 101 may obtain information for displaying the visual object 141 in the preview area 130 by executing a software application (e.g., a clock application) corresponding to the clock widget. The information may include parameters indicating the appearance of the visual object 141 and/or the clock widget, such as a position, shape, size, and/or color of the visual object 141.

In response to an input associated with the visual object 141, the electronic device 101 may display a pop-up window 411 for changing the properties of a widget (e.g., the clock widget) corresponding to the visual object 141. The pop-up window 411 may be displayed superimposed on the display 110 within the state 401 of displaying the edit screen. For example, the pop-up window 411 may occupy a portion (e.g., a portion including the bottom edge of the display area) of the entire display area of the display 110 occupied by the edit screen. In the state 401 in which the visual object 141 is displayed by executing a software application different from the lock screen application together with the lock screen application providing the edit screen, the electronic device 101 may display the pop-up window 411 provided from the software application in response to the input. For example, the pop-up-window 411 may be provided from a software application executed by the electronic device 101 to provide the visual object 141.

Referring to FIG. 4A, within the state 401, an example of the pop-up window 411 overlappingly displayed on the display 110 is illustrated. In case of receiving an input for changing the properties of the clock widget using the visual object 141 associated with the clock widget, the electronic device 101 may display options for adjusting a layout of text (e.g., a number and/or character string indicating date and/or time) to be included in the clock widget in the pop-up window 411. Referring to FIG. 4A, in the pop-up-window 411, the electronic device 101 may display images, icons, and/or visual objects corresponding to each of the options.

Referring to FIG. 4A, in the pop-up window 411, the electronic device 101 may display options 412 associated with a color of text to be included in the clock widget. The options 412 may include at least one of a recommended color calculated by the electronic device 101, a plurality of preset colors in a color space, and/or a gradation color based on at least two colors. In response to an input of selecting any one of the options 412, the electronic device 101 may change the properties of the clock widget such that the color included in the clock widget has a color corresponding to the option associated with the input.

Referring to FIG. 4A, the state 402 of the electronic device 101 is illustrated after receiving an input for selecting any one of the options 412. In response to the input, the electronic device 101 may hide or remove the pop-up window 411 being displayed on the display 110. In the state 402 after the pop-up window 411 is removed, the electronic device 101 may display, on the preview area 130, the visual object 141 having a color associated with an option corresponding to the input. Referring to the states 401 and 402 of FIG. 4A, a first cropped portion cropped from a source image of the electronic device 101 in the state 401 and a second cropped portion cropped from the source image in the state 402 may be different from each other. For example, the visual object 141 may be displayed in the preview area 130 to represent a clock widget having properties changed by the input.

In case of receiving an input for changing the properties of the widget of the lock screen, the electronic device 101 according to an embodiment may not only change the properties of the widget, but also change the properties (e.g., a position, size, magnification, and/or color) of another widget and/or the image 150 to be displayed together with the widget within the lock screen. Referring to the states 401 and 402 of FIG. 4A, after receiving an input for changing the properties (e.g., the color of text included in the clock widget) of the clock widget corresponding to the visual object 141 based on the options 412, the electronic device 101 may enlarge the image 150 within the preview area 130. Enlarging the image 150 may include resetting or enlarging a portion to be cropped for being displayed on the edit screen and/or the preview area 130 in the source image stored in the electronic device 101. Based on the enlargement of the image 150, the area within the preview area 130 of the portion 410 associated with a subject may be increased. For example, the electronic device 101 may change a position and/or size of at least a portion of the image 150 visible via the preview area 130 according to the color of the widget and/or visual object 141 changed by the input. For example, the electronic device 101 may change the hue and/or saturation of at least a portion of the image 150 visible via the preview area 130 according to the color of the widget and/or visual object 141 changed by the input.

For example, in case of receiving an input for changing the color of the clock widget corresponding to the visual object 141, the electronic device 101 may make a representative color of at least a portion of the image 150, which is visible via the preview area 130, to match the color, or have the hue and/or saturation similar to the color. For example, by changing the position and/or size of at least a portion of the image 150 visible via the preview area 130, the electronic device 101 may change the representative color. Herein, the representative color may include an average color and a mode color of each color of pixels included in the image 150, and/or a mixture of the colors based on a preset equation. The representative color may be referred to as a vibrant color. Within the state 402 of FIG. 4A, the representative color of the portion of the image 150 corresponding to the preview area 130 may match the color of the text of the clock widget represented via the visual object 141, or may have the hue difference less than a preset threshold with respect to the color.

Within the state 402 of FIG. 4A, in response to an input for selecting a visual object 132, the electronic device 101 may store a layout of the preview area 130 being displayed within the state 402. After the layout of the preview area 130 in the state 402 is stored, in case that a state of the electronic device 101 is switched to a lock state (e.g., the state 330 of FIG. 3), the electronic device 101 may display a lock screen including one or more widgets (e.g., the clock widget corresponding to the visual object 141) arranged based on the layout on the display 110 and the image 150. The portion of the image 150 visible via the lock screen may match the portion of the image 150 visible via the preview area 130 within the state 402 of FIG. 4A.

An input for changing the properties of the widget is not limited to an input for changing the color of the widget. Referring to FIG. 4B, within the state 401 of FIG. 4A, the electronic device 101 may receive an input for moving the visual object 141 corresponding to the clock widget. The input may include a drag gesture of an external object in contact with a portion of the display 110 on which the visual object 141 is displayed. According to a path 431 in which the external object is dragged on the preview area 130 of the display 110, the electronic device 101 may change or shift a position of the visual object 141 within the preview area 130. For example, the visual object 141 may be moved in parallel within the preview area 130 along the path 431.

Referring to FIG. 4B, in case that an external object moving along the path 431 is separated from the display 110 or is moved outside the preview area 130, the electronic device 101 may stop adjusting the position of the visual object 141 along the path 431. Referring to FIG. 4B, the state 403 after the electronic device 101 stops adjusting the position of the visual object 141 is illustrated. Referring to FIG. 4B, within the state 403 after an input for moving the visual object 141 is completed (or released), the electronic device 101 may display the visual object 141 at a location within the preview area 130 where the input is completed. In case that the visual objects 141, 142 and 143 have positions that are linked with each other within the preview area 130, the electronic device 101 may display all of the visual objects 141, 142 and 143 at a location within the preview area 130 where the input is completed.

Referring to FIG. 4B, the visual objects 141, 142 and 143 may be aligned according to a position in the preview area 130. For example, within the state 401 in which the visual objects 141, 142 and 143 are arranged along a center of a horizontal axis of the preview area 130, the electronic device 101 may display the visual objects 141, 142 and 143 such that center points of the visual objects 141, 142 and 143 are disposed along a vertical axis that evenly divides the preview area 130 (e.g., center alignment). For example, in the state 403 in which the visual objects 141, 142, and 143 are moved closer to a right edge of the preview area 130, the electronic device 101 may display the visual objects 141, 142, and 143 such that right edges of the visual objects 141, 142, and 143 are disposed along a vertical axis parallel to the right edge of the preview area 130 (e.g., right alignment). Similarly, in case that the visual objects 141, 142 and 143 are moved close to a left edge of the preview area 130, the electronic device 101 may display the visual objects 141, 142 and 143 such that left edges of the visual objects 141, 142 and 143 are disposed along a vertical axis adjacent to the left edge of the preview area 130 (e.g., left alignment).

In case of receiving an input for moving a widget, the electronic device 101 according to an embodiment may not only move a widget corresponding to the input, but also change properties of another widget and/or the image 150 to be displayed together with the widget within the lock screen. Referring to the states 401 and 403 of FIG. 4B, after receiving an input (e.g., a drag gesture based on an external object performed along the path 431) for moving the visual object 141 along the path 431, the electronic device 101 may change a position and/or size of the image 150 visible via the preview area 130. As the state 401 of FIG. 4B is switched from the state 401 to the state 403, the position in the preview area 130 in which the portion 410 associated with a subject is visible may move away from the visual object 141. For example, the portion 410 associated with the subject may be changed to a portion including a lower left corner of the preview area 130. Together with changing the position of the portion 410 associated with the subject within the preview area 130, the electronic device 101 may enlarge the portion 410 to increase a ratio and/or area of the portion 410 in the preview area 130.

While receiving an input for moving a widget such as the visual object 141, the electronic device 101 may move a widget corresponding to the input, and change the position and/or size of the image 150 (e.g., the portion 410 corresponding to the subject). The disclosure is not limited thereto, and the electronic device 101 may move a widget corresponding to the input, and change the position and/or size of the image 150 based on the release of the input.

Within the state 403 of FIG. 4B, in response to an input indicating selection of the visual object 132, the electronic device 101 may store the layout of the preview area 130 displayed in the state 403. For example, in case that the state of the electronic device 101 is switched to a lock state after the layout is stored, the electronic device 101 may display a lock screen based on the layout on the display 110. For example, within the lock screen, a clock widget (e.g., a clock widget corresponding to the visual object 141) may be displayed at a position (e.g., a position adjacent to a right edge of the display 110) corresponding to a position within the preview area 130 of the state 403. For example, within the lock screen, the image 150 may be positioned in a portion including a lower left corner of the display 110. Referring to the states 401 and 403 of FIG. 4B, in each of the states 401 and 403, portions cropped from the source image stored in the electronic device 101 may be formed independently from the source image. For example, the first cropped portion cropped from the source image in the state 401 and the second cropped portion cropped from the source image in the state 403 may be different from each other or at least partially superimposed. A position and/or size of the first cropped portion in the source image may be different from a position and/or size of the second cropped portion in the source image or may be set independently.

An input for changing the properties of a widget is not limited to an input for changing a color and/or position of the widget. Referring to FIG. 4C, within the state 401 of FIG. 4A, the electronic device 101 may receive an input for changing a size of the visual object 141 corresponding to the clock widget. The input may include a pinch gesture of external objects (e.g., two fingers) (substantially simultaneously) contacted with at least two locations in the portion of the display 110 on which the visual object 141 is displayed. For example, in case that the external objects in contact with the portion of the display 110 on which the preview area 130 is displayed approach each other, a distance between the external objects may be reduced. Within the example, the electronic device 101 may reduce the size of the visual object 141 according to the reduced distance.

Within the example state 401 of FIG. 4C, one of the external objects contacted on the portion of the display 110 in which the visual object 141 is displayed may move along a path 441, and another external object may be moved along a path 442. In case that the external objects move substantially simultaneously along the paths 441 and 442, the distance between the external objects may increase. The electronic device 101 may enlarge the size of the visual object 141 according to the increased distance. For example, the electronic device 101 may increase the size of the visual object 141 until a width and/or height of the visual object 141 increases beyond a width and/or height of the preview area 130.

Referring to FIG. 4C, in case that at least one of the external objects moving along the paths 441 and 442 is separated from the display 110 or moved outside the preview area 130, the electronic device 101 may stop enlarging or reducing the visual object 141 according to the distance between the external objects. Referring to FIG. 4C, the state 404 after the electronic device 101 stops adjusting the size of the visual object 141 is illustrated. Referring to FIG. 4C, within the state 404 after an input for adjusting the size of the visual object 141 is completed, the electronic device 101 may display the visual object 141 having a size adjusted by the input in the preview area 130.

In an embodiment, in case that the visual objects 141, 142 and 143 have sizes linked with each other within the preview area 130, the electronic device 101 may enlarge or reduce all of the visual objects 141, 142 and 143 using the size adjusted by the input. Within the example state 404 of FIG. 4C, the visual objects 142 and 143 may also be enlarged according to a ratio at which the size (e.g., dimensions such as height, width, and/or area) of the visual object 141 is enlarged by an input adjusting the size of the visual object 141. For example, in case that the visual object 141 is reduced by the input, the visual objects 142 and 143 may also be reduced according to a ratio at which the size of the visual object 141 is reduced by the input.

In case of receiving an input for adjusting a size of a widget, the electronic device 101 according to an embodiment may not only enlarge or reduce a widget corresponding to the input, but also change or adjust the properties of another widget and/or the image 150 to be displayed together with the widget within the lock screen. Referring to the states 401 and 404 of FIG. 4C, in case that an input (e.g., a pinch gesture based on external objects performed along the paths 441 and 442) for enlarging the visual object 141 along the paths 441 and 442 is received, the electronic device 101 may change or adjust the position and/or size of the image 150 visible via the preview area 130.

As the state is switched from the state 401 to the state 404 of FIG. 4, a size of the preview area 130 in which the portion 410 associated with a subject is visible may be enlarged. For example, the electronic device 101 may enlarge or reduce the portion 410 within the preview area 130 using the ratio (e.g., the amount of change in width, height, and/or area) at which the size of the visual object 141 is enlarged by the input. The disclosure is not limited thereto, and the electronic device 101 may enlarge or reduce the portion 410 such that a width and/or height of the portion 410 associated with the subject within the preview area 130 corresponds to the width and/or height of the visual object 141 having a size changed by the input. Together with changing the size of the portion 410, the electronic device 101 may change or adjust a position of the portion 410 in the preview area 130 using a position in the preview area 130 of the visual object 141 having the changed size.

Referring to the states 401 and 404 of FIG. 4C, the first cropped portion (e.g., the image 150 displayed via the preview area 130 within the state 401) that is cropped from the source image stored in an electronic device 100 within the state 401 and the second cropped portion (e.g., the image 150 displayed via the preview area 130 within the state 403) that is cropped from the source image stored in the electronic device 100 within the state 403 may be different from each other. For example, a position and/or size of the first cropped portion in the source image may be different from a position and/or size of the second cropped portion in the source image.

In the state 404 of FIG. 4C, the electronic device 101 that has received an input indicating selection of the visual object 132 may store a layout of the preview area 130 of the state 404. After the layout of the preview area 130 of the state 404 is stored, in case that the state of the processor of the electronic device 101 is switched to a lock state or receives an input for displaying a lock screen, the electronic device 101 may display a lock screen having the stored layout. Within the lock screen, the clock widget may have the position and/or size within the preview area 130 of the visual object 141 displayed within the preview area 130 of the state 404. Within the lock screen, the image 150 may have a position, size, and/or magnification that was displayed within the preview area 130 of the state 404. The disclosure is not limited thereto, and the electronic device 101 that has received an input associated with the visual object 132 within the state 401 of FIGS. 4A to 4C may determine or store the layout of the preview area 130 in the state 401 as a layout of the lock screen.

Referring to FIG. 4D, example states 405 and 406 of the electronic device 101 providing a lock screen having a layout of the state 404 of FIG. 4C are illustrated. Within the state 404 of FIG. 4C, after receiving an input for storing the layout of the lock screen, based on being switched to the lock state, the electronic device 101 may display the lock screen as in the state 405. The layout of the lock screen displayed in the display 110 may have a positional relationship between the visual objects 141, 142, 143, 144, 145, and 146 and the image 150 stored in the state 405.

Referring to FIG. 4D, within the state 405 of displaying the lock screen, the electronic device 101 may display one or more visual objects 461, 462, and 463 for representing notification messages. For example, based on a signal received from the electronic device 101 via a network, such as a push message, and/or an event generated by a software application executed by the electronic device 101, the electronic device 101 may display one or more visual objects 461, 462, and 463. A position where the visual objects 461, 462, and 463 are displayed may be associated with positions of widgets (e.g., visual objects 161, 163, 165, and 166) set within the state 404. For example, the electronic device 101 may display the visual objects 461, 462, and 463 in a position and/or area that does not superimpose with the visual objects 161 and 163 displayed on the display 110. Within the display 110, the visual objects 461, 462, and 463 may be displayed below the visual objects 161 and 163. As the notification messages increase, the number of the visual objects 461, 462, and 463 displayed via the display 110 may increase.

Referring to FIG. 4D, within the state 406 after the state 405, an area of the display 110 occupied by the visual objects 461, 462, and 463 may increase. The electronic device 101 according to an embodiment may change a position and/or size of the portion 410 (e.g., the visual object area) associated with a subject in a background image of the lock screen based on a state of the display 110 further including the visual objects 461, 462, and 463. For example, the electronic device 101 may display the portion 410 by reducing such that the portion 410 is positioned away (or not covered by) from the visual objects 461, 462, and 463 within the lock screen. Within the state 406 of displaying the portion 410 at a lower end of the display 110, the electronic device 101 may reduce or move the portion 410 such that the portion 410 is positioned away from the visual objects 165 and 166 disposed at the lower end of the display 110.

In an embodiment of switching from the state 405 to the state 406 of FIG. 4D, the example operation in which the size of the portion 410 is reduced has been described, but the disclosure is not limited thereto. For example, in case that the number of the visual objects 461, 462, and 463 in the display 110 is reduced (e.g., in case that a user input is received to remove at least one of the visual objects 461, 462, and 463), the electronic device 101 may enlarge or move the portion 410 again using a position and/or area of a portion not occupied by the visual objects 461, 462, and 463 in the display 110.

As described above, the electronic device 101 according to an embodiment may receive an input for changing at least one of properties (e.g., properties corresponding to position, size, and/or color, respectively) of one or more widgets included in the lock screen while displaying an edit screen for adjusting the layout of the lock screen. Based on the input, the electronic device 101 may change at least one property of the one or more widgets. Based on the input, the electronic device 101 may change at least one of properties (e.g., properties corresponding to position, size, and/or color, respectively) of a background image (e.g., the image 150 of FIGS. 4A to 4D) disposed below the one or more widgets in the lock screen. For example, in response to an input for changing a position of one or more widgets in the lock screen corresponding to the edit screen via the edit screen, the electronic device 101 may move the position of the portion 410 associated with a subject of the background image to a position based on the changed position within the preview area 130 of the edit screen.

Hereinafter, with reference to FIG. 5, an example flowchart with respect to the operation of the electronic device 101 described with reference to FIGS. 4A to 4D will be described in greater detail.

FIG. 5 is a flowchart illustrating an example operation of an electronic device according to various embodiments. The electronic device 101 of FIGS. 1 to 2, and/or the processor 210 of FIG. 2 may perform the operation of the electronic device described with reference to FIG. 5. At least one of the operations of FIG. 5 may be associated with the operation of the electronic device 101 described with reference to FIGS. 4A to 4D. The order in which the operations of FIG. 5 are performed is not limited to the order illustrated in FIG. 5. For example, the operations of FIG. 5 may be performed in a different order than the order illustrated in FIG. 5, or at least two of the operations of FIG. 5 may be performed substantially simultaneously (e.g., multitasking and/or multithreading).

Referring to FIG. 5, in operation 510, the processor of the electronic device according to an embodiment may receive a user input for changing the properties of a visual object. The user input of the operation 510 may be received while an edit screen for editing a layout of a lock screen (e.g., the lock screen 160 of FIG. 1) is displayed. The processor may guide a lock screen having a layout adjusted by the edit screen via a preview area (e.g., the preview area 130 of FIGS. 1 and 4A to 4D) of the edit screen. The processor may receive the user input of the operation 510 via the preview area. Inputs received in the state 401 of FIGS. 4A to 4D may be an example of the user input of the operation 510. The visual object of the operation 510 may correspond to a widget and/or an icon to be included in the lock screen as a visual object included in the preview area.

Referring to FIG. 5, in operation 520, the processor of the electronic device according to an embodiment may determine whether the properties indicating a color of the visual object have been changed. The properties of operation 520 may include a color of text, figure, image, and/or video included in the visual object. The properties of operation 520 may include one or more numerical values associated with the color, represented using a color space of RGB, YUV (e.g., YCbCr), and/or HSV. In case that the properties indicating the color of the visual object is changed (520-Yes), the processor may perform operation 530. In case that the properties representing the color of the visual object is not changed by the user input of the operation 510 and/or is maintained (520-No), the processor may perform operation 540.

Referring to FIG. 5, in operation 530, the processor of the electronic device according to an embodiment may change a position or size of an image in the preview area using a first color corresponding to the changed properties. The processor performing the operation 530 in response to the change in the properties of the operation 520 may check a hue, saturation, and value of the first color corresponding to the changed color using the color space of the HSV based on a hue, saturation, and value(or brightness). The processor may determine or calculate a reference color to be used to change the position or size of the image using the hue, the saturation, and/or the value. The reference color may be determined as a color substantially the same as or similar to the first color. The reference color may include a vibrant color.

In operation 530, the processor may change a position and/or size of an image (e.g., the image 150 of FIGS. 1 and 4A to 4D) in the preview area using the first color and/or the reference color determined using the first color. The processor may select, determine, or divide at least a portion of the image included in the preview area such that a representative color of at least a portion of the image visible via the preview area matches the reference color. While switching from the state 401 to the state 402 of FIG. 4A, the processor may perform the operation 530 of FIG. 5. The processor that has changed the position and/or size of the image according to the operation 530 may conditionally perform operation 540 of FIG. 5.

The disclosure is not limited thereto, and the processor may change a hue, saturation, and/or brightness of the visual object by comparing a color of the visual object changed by the properties of operation 510 and the representative color of the image in the preview area. For example, in order to enhance the visibility of the visual object compared to the image displayed via the preview area, the processor may change the hue, saturation, and/or value of the visual object. For example, in case that the hue of the representative color, which is included in a range of 0 to 360, is lower than or equal to 44, or is included in a first preset range of greater than or equal to 226 and lower than or equal to 359, the processor may determine whether the color of the visual object corresponds to a color exceeding step 7 among 12 preset colors associated with the representative color. In case that the color of the visual object corresponds to a color exceeding step 7, the processor may extract a color having a brightness level that is 65 greater than the colors of steps 8 to 10 among the 12 preset colors. Using the extracted color, the processor may change the hue and/or value of the visual object. For example, the processor may increase the hue of the visual object by 5 and increase the saturation by 30. In case that the color of the visual object corresponds to a color lower than step 7, the processor may extract a color having a brightness level that is 35 lower than the colors of steps 1 to 7. Using the extracted color, the processor may change the hue and/or saturation of the visual object. For example, the processor may increase the hue of the visual object by 5 and increase the saturation by 30.

For example, in case that the hue of the representative color of the image is included in a second preset range that exceeds 45 and is lower than 89, the processor may determine whether the color of the visual object corresponds to a color exceeding step 6 among 12 preset colors associated with the representative color. In case that the color of the visual object exceeds step 6, the processor may extract a color having a brightness level that is 50 levels greater than the colors of steps 8 to 12. Using the extracted color, the processor may reduce the hue of the visual object by 10 and increase the saturation by 30. In case that the color of the visual object is lower than step 6, the processor may extract a color having a brightness level that is 50 levels lower than the colors of steps 1 to 6. Using the extracted color, the processor may reduce the hue of the visual object by 10 and increase the saturation by 30.

For example, in case that the hue of the representative color of the image is included in a third preset range that exceeds 90 and is less than 226, the processor may determine whether the color of the visual object corresponds to a color exceeding step 7 among the 12 preset colors associated with the representative color. In case that the color of the visual object exceeds step 7, the processor may extract a color having a brightness level that is 65 levels greater than the colors of steps 8 to 12. Using the extracted color, the processor may reduce the hue of the visual object by 10 and increase the saturation by 30. In case that the color of the visual object is less than step 7, the processor may extract a color having a brightness that is 35 levels lower than the colors of steps 1 to 7. Using the extracted color, the processor may reduce the hue of the visual object by 10 and increase the saturation by 30.

Referring to FIG. 5, in the operation 540, the processor of the electronic device according to an embodiment may change the position and/or size of the image in the preview area based on whether the properties corresponding to the position and/or size of the visual object have changed. The properties of operation 540 may include coordinate values indicating the position and/or size of the visual object within the preview area of the edit screen. The processor may perform operation 540 in case of receiving an input for changing the position and/or size of the visual object described with reference to FIGS. 4B and 4C. The processor performing the operation 540 may change the position and/or size of the image in the preview area using a positional relationship, layout, and/or composition between at least a portion of the image included in the preview area and one or more visual objects corresponding to each of one or more widgets of the lock screen. The operation of changing the position and/or size of the image in the preview area may include the operation of adjusting a reference coordinate value of the image in the preview area and/or the operation of adjusting the properties associated with the magnification of the image. While switching from the state 401 to the state 403 of FIG. 4B, and/or while switching from the state 401 to the state 404 of FIG. 4C, the processor may perform the operation 540 of FIG. 5.

As described above, in response to an input of changing the position and/or size of one or more visual objects corresponding to one or more widgets of the lock screen, the processor of the electronic device according to an embodiment may change the properties of an image displayed with the one or more widgets within the lock screen. The properties of the image changed by the electronic device may include a position, size, and/or color of the image within the lock screen.

The electronic device according to an embodiment may change positions and/or sizes of one or more widgets superimposed on the image according to an image to be displayed via the lock screen. Hereinafter, with reference to FIGS. 6A and 6B, example operation of an electronic device that changes the positions and/or sizes of one or more widgets included in the lock screen using an image associated with the lock screen will be described in greater detail.

FIGS. 6A and 6B are diagrams illustrating example states of an electronic device displaying an edit screen associated with a lock screen according to various embodiments. The electronic device 101 of FIGS. 1 to 2, and/or the processor 210 of FIG. 2 may perform the operation of the electronic device described with reference to FIGS. 6A to 6B. At least one of the operations of FIGS. 6A and 6B may be associated with the operation of the electronic device 101 described with reference to FIG. 5.

Referring to FIGS. 6A and 6B, example states of the electronic device 101 displaying an edit screen on a display 110 are illustrated. After completing authentication of a user of the electronic device 101, the electronic device 101 may display example screens of FIGS. 6A and 6B by executing, for example, the lock screen application 230 of FIG. 2.

In the lock screen, the electronic device 101 may display an image personalized by the user. In an embodiment of the electronic device 101 including one or more cameras, the image may have been obtained or captured using the one or more cameras. The image may be stored in memory (e.g., the memory 215 of FIG. 2) of the electronic device 101, or may be downloaded from an external electronic device such as a server.

Referring to FIG. 6A, an image 630 including a portion 632 associated with a human face is illustrated. In response to an input associated with a visual object 131 received while displaying the edit screen on the display 110, the electronic device 101 may display another screen different from the edit screen in order to receive another input for selecting an image to be included in a preview area 130 of the edit screen. The other screen may be provided by a software application configured to search or browse an image and/or video stored in the electronic device 101, such as a gallery application. Via the other screen, the electronic device 101 may receive an input for adding the image 630 to the lock screen. The electronic device 101 that has received the input may add the image 630 to the preview area 130.

In response to an input for adding or changing the image 630 to the lock screen, the electronic device 101 may search for the portion 632 associated with a subject within the image 630. For example, the electronic device 101 may check or identify information indicating the portion 632 using metadata of the image 630. For example, the electronic device 101 may check or identify information indicating the portion 632, using a neural network capable of receiving the image 630 and/or feature information on the image 630.

From the example image 630 of FIG. 6A, the electronic device 101 may check or calculate not only the portion 632 associated with a subject, but also at least one category associated with the subject among preset categories (e.g., categories for classifying people, animals, and/or various objects) for classifying subjects. The preset categories may be referred to as classes and/or types. The processor may check or identify, one or more subjects associated with the portion 632 of the image 630, from the metadata of the image 630. The portion 632 of the image 630 may be referred to as a foreground area and/or a foreground portion, in terms of including the subject. Another portion (e.g., a portion 634) within the image 630 other than the portion 632 may be referred to as a background area and/or a background portion.

Referring to FIGS. 6A and 6B, the preview area 130 may be divided into sub-areas 610 and 620. A shape and/or size of the sub-areas 610 and 620 marked with a dashed line are examples and do not limit the disclosure. The sub-areas 610 and 620 are illustrated for convenience of description, and the electronic device 101 may not display any visual object guiding the sub-areas 610 and 620 on the display 110. The disclosure is not limited thereto, and in order to adjust the sub-areas 610 and 620, the electronic device 101 may display a visual object (e.g., a frame) having a shape of a line representing a boundary line between the sub-areas 610 and 620 on the display 110. The visual object may be moved by a user input such as a drag gesture. A position within the preview area 130 of the visual object, movable by the user input, may indicate positions, shapes, and/or sizes of each of the sub-areas 610 and 620.

A ratio of areas in which the sub-areas 610 and 620 occupy the preview area 130 may be the same as a ratio of the sub-areas 610 and 620 to be formed on the lock screen. In the example state of FIG. 6A, the sub-area 610 including a bottom edge of the preview area 130 may be formed in the image 630 to emphasize the portion 632 that is a foreground object. In the example state of FIG. 6A, the sub-area 620 including an upper edge of the preview area 130 may be formed to include visual objects 141, 142 and 143 corresponding to widgets of the lock screen.

Referring to FIG. 6A, the electronic device 101 that detects the portion 632 associated with a subject in a category for classifying people (or a face of the people) using the metadata of the image 630 may emphasize the part 632 within the preview area 130. For example, the electronic device 101 may make a position and/or size of the portion 632 within at least a portion of the image 630 visible via the preview area 130 different from a position and/or size of the portion 632 within the image 630. To emphasize the portion 632 within the preview area 130, the electronic device 101 may divide the portion 632 from the image 630.

For example, the electronic device 101 may display at least a portion (or a background portion of the image 630) of the image 630 as a background of the preview area 130, and display the portion 632 divided from the image 630 in the sub-area 610 of the preview area 130. In the above example, in a background portion of the image 630 displayed as the background of the preview area 130, the removed portion 632 as an image in which the portion 632 associated with a subject is removed may include a color (e.g., a representative color of the image 630 and/or background portion), and/or a texture. For example, the electronic device 101 may synthesize another image, from the image 630, in which the portion 632 associated with the subject is removed.

Referring to FIG. 6A, the electronic device 101 according to an embodiment may determine a position and/or size of the portion 632 to be disposed in the sub-area 610 based on a position and/or size of the portion 632 in the image 630. For example, using a position of the horizontal coordinate (e.g., x coordinate) of a center point p1 of the portion 632 associated with the subject, the electronic device 101 may determine a reference position of the portion 632 within the sub-area 610. For example, when determining the horizontal coordinate of the reference position of the portion 632 in the sub-area 610 using a ratio between the horizontal coordinate and a horizontal length of the image 630, the electronic device 101 may determine the reference position of the portion 632 in the sub-area 610 using a ratio range of Table 1.

**[Table 1]**

| Ratio range | Reference position |
|---|---|
| 0 ≦ ratio_x < 40 | Vertical axis x1 of the sub-area 610 |
| 40 ≦ ratio_x < 60 | Vertical axis x2 of the sub-area 610 |
| 60 ≦ ratio_x ≦ 100 | Vertical axis x3 of the sub-area 610 |

The ratio_x of Table 1 is a ratio expressed as a percentage and may refer, for example, to a ratio between the horizontal coordinate of the center point p1 and the horizontal length of the image 630. The reference position of Table 1 may indicate a position of the horizontal coordinate of the center point of the portion 632 to be displayed in the preview area 130. Referring to Table 1 and FIG. 6A, in case that a ratio between the horizontal coordinate of the center point p1 of the portion 632 and the horizontal length of the image 630 has a numerical value close to 50%, the electronic device 101 may determine a position of the portion 632 in the sub-area 610 such that the center point of the portion 632 in the sub-area 610 is disposed on the vertical axis x2.

Referring to FIG. 6A, the vertical axes x1, x2, and x3 of Table 1 are illustrated. The vertical axis x1 may be used to align the portion 632 in case that the portion 632 associated with a subject is adjacent to a left edge within the image 630. The vertical axis x2 may be used to align the portion 632 in case that the portion 632 is adjacent to the center of the image 630. The vertical axis x3 may be used to align the portion 632 in case that the portion 632 is adjacent to a right edge of the image 630.

The electronic device 101 according to an embodiment may change a size of the portion 632 displayed in the sub-area 610. For example, the electronic device 101 may enlarge or reduce the portion 632 such that a height of the portion 632 displayed in the sub-area 610 has a preset height (e.g., a multiplication of the preset ratio and height of the sub-area 610). Referring to FIG. 6A, an embodiment in which the electronic device 101 enlarges the portion 632 within the sub-area 610 is illustrated, but the disclosure is not limited thereto.

Referring to FIG. 6A, the electronic device 101 that detects the portion 632 associated with a subject and the background portion of the image 630 from the image 630 to be displayed in the preview area 130 may determine or change a hue, saturation, brightness, and/or value(or brightness) of the portion 632 and the background portion. For example, the electronic device 101 may check or calculate the brightness difference between the background portion and the foreground portion (e.g., the portion 632) of the image 630 to be displayed via the lock screen. Using the brightness difference, the electronic device 101 may change at least one of brightnesses of the background portion and the foreground portion. For example, the electronic device 101 may increase or decrease the brightness of the background portion in order to increase the brightness difference. The disclosure is not limited thereto.

Referring to FIG. 6A, in an example state where the image 630 is at least partially displayed in the preview area 130, the electronic device 101 may determine the properties of visual objects 141, 142, 143, 144, 145, and 146 associated with widgets included in the lock screen according to the properties of the image 630 displayed in the preview area 130. For example, using a color, hue, saturation, and/or value of at least a portion (e.g., the portion 632 associated with a subject and the background portion) of the image 630 visible via the preview area 130, the electronic device 101 may change properties (e.g., position, size, and/or color) of at least one of the visual objects 141, 142, 143, 144, 145, and 146.

For example, as a background of the lock screen, the electronic device 101 that has received an input for adding or changing the image 630 may change positions, sizes, and/or colors of at least one of the visual objects 141, 142, 143, 144, 145, and 146, using color distribution of pixels included in the preview area 130 of at least portion of the image 630 displayed via the preview area 130 of the edit screen. Based on changing a position of at least one of the visual objects 141, 142, 143, 144, 145, and 146, the electronic device 101 may determine a color of at least one visual object having the changed position using the color distribution of pixels of the image 630 corresponding to the changed position.

As described above, when editing a layout of the lock screen including the image 630 including a divisible foreground portion (e.g., the portion 632), the electronic device 101 according to an embodiment may adjust the layout such that the foreground portion is emphasized within the lock screen. For example, the operation of the electronic device 101 for adjusting the layout may include the operation for adjusting a position and/or size of the foreground portion within the lock screen, as well as the properties of one or more widgets displayed together with the foreground portion within the lock screen. For example, the operation of the electronic device 101 for adjusting the layout may include the operation for adjusting a color, hue, saturation, and/or value of at least a portion (e.g., the foreground portion and the background portion) of the image 630 included in the lock screen.

Referring to FIG. 6B, an image 650 including a portion 652 associated with an object (e.g., a flower pot) is illustrated. Within an example state of FIG. 6B, which displays an edit screen for editing a layout of a lock screen including the image 650, the electronic device 101 may display the image 650 and the visual objects 141, 142, 143, 144, 145, and 146 superimposed on the image 650 in the preview area 130. The electronic device 101 may detect or check the portion 652 associated with a subject in the image 650 from metadata of the image 650 or by performing an object recognition algorithm with respect to the image 650. The electronic device 101 may detect or check information indicating a category, class, and/or type of the subject together.

In a state of FIG. 6B in which the part 652 associated with the subject included in the category for classifying objects is detected, the electronic device 101 may determine a position and/or size of the portion 652 within the preview area 130 using a position and/or size of the sub-area 610 formed in the preview area 130 and/or the portion 652 within the image 650. Referring to FIG. 6B, vertical axes x4, x5, and x6 for aligning the portion 652 associated with a subject classified in the above category within the preview area 130 are illustrated. The vertical axes x4, x5, and x6 of FIG. 6B may correspond to the vertical axes x1, x2, and x3 of FIG. 6A, respectively. The horizontal coordinate (e.g., x coordinate) of the portion 652 within the preview area 130 may be determined using a ratio range of Table 2.

**[Table 2]**

| Ratio range | Reference position |
|---|---|
| 0 ≦ ratio_x < 30 | Vertical axis x4 of the sub-area 610 |
| 30 ≦ ratio_x < 70 | Vertical axis x5 of the sub-area 610 |
| 70 ≦ ratio_x ≦ 100 | Vertical axis x6 of the sub-area 610 |

The ratio_x of Table 2 is a ratio expressed as a percentage, and may refer, for example, to a ratio between the horizontal coordinate of a reference point p2 of the portion 652 in the image 650 and a horizontal length of the image 650. The reference position of Table 2 may correspond to a position of the horizontal coordinate of a center point of the portion 652 within the preview area 130. Referring to Table 2 and FIG. 6B, in case that a ratio between the horizontal coordinate of the reference point p2 and the horizontal length (e.g., width) of the image 650 exceeds 70%, the electronic device 101 may determine a position of the portion 652 within the preview area 130 such that the center point of the portion 652 is disposed on the vertical axis x6 of the preview area 130.

Referring to FIG. 6B, each of the vertical axes x4, x5, and x6 may be formed to align a background portion (e.g., a portion 654) of the image 650 with another foreground portion (e.g., the portion 652). For example, the vertical axis x4 may be used to dispose a foreground portion adjacent to a left edge of the image 650. For example, the vertical axis x5 may be used to dispose a foreground portion adjacent to the center of the image 650. For example, the vertical axis x6 may be used to dispose a foreground portion adjacent to a right edge of the image 650.

The electronic device 101 according to an embodiment may change a size of the portion 652 disposed on any one vertical axis (in the example state of FIG. 6B, the vertical axis x6) of the sub-area 610. For example, the electronic device 101 may cause the portion 652 to have a preset height within the sub-area 610 by enlarging or reducing the portion 652 within the sub-area 610.

Referring to FIG. 6B, the electronic device 101 that determines a positional relationship between the foreground portion (e.g., the portion 652) and the background portion of the image 650 in the preview area 130 may change the properties of at least one of one or more visual objects 141, 142, 143, 144, 145, and 146 in the preview area 130 using the positional relationship. The properties associated with a widget that is changed by the positional relationship between the foreground portion and the background portion of the image 650 in the preview area 130 and to be displayed via the lock screen may include a position, size, color, hue, saturation, and/or value within the lock screen of the widget. Referring to FIG. 6B, the electronic device 101 in which the portion 652 is disposed at a position (e.g., a portion on the vertical axis x6) adjacent to a right edge of the preview area 130 may move the visual objects 141, 142 and 143 according to the position of the portion 652. For example, the electronic device 101 may move the positions of the visual objects 141, 142 and 143 to positions adjacent to a left edge of the preview area 130.

An example state in which the electronic device 101 disposes the image in the preview area 130 in response to an input of selecting an image (e.g., the images 630 and 650) to be disposed in the preview area 130 and/or the lock screen via the visual object 131 has been described, but the disclosure is not limited thereto. For example, the electronic device 101 may, in response to an input for changing a position and/or size of a background image of a lock screen, received via the preview area 130, not only change the position and/or size of the background image, but also change the properties of one or more widgets in the lock screen. Since the background image and/or the properties of one or more widgets included in the lock screen are linked, the electronic device 101 may systematically change the layout of the lock screen.

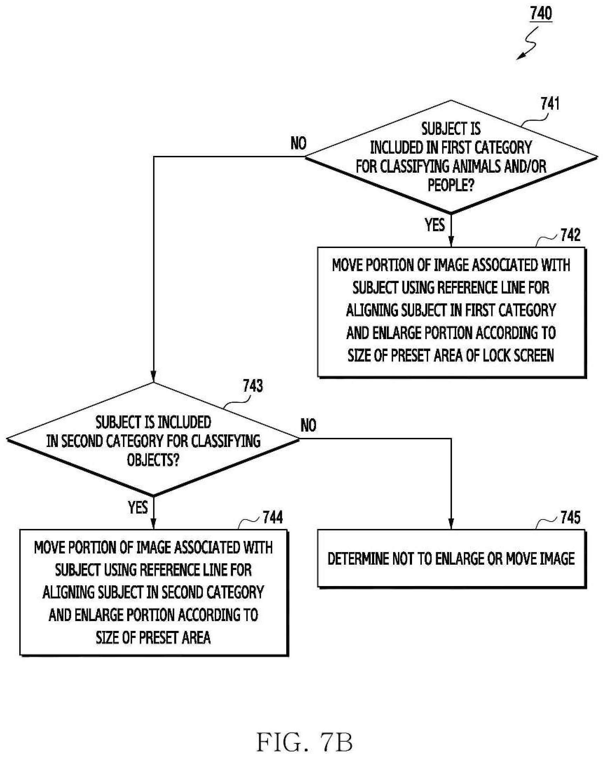

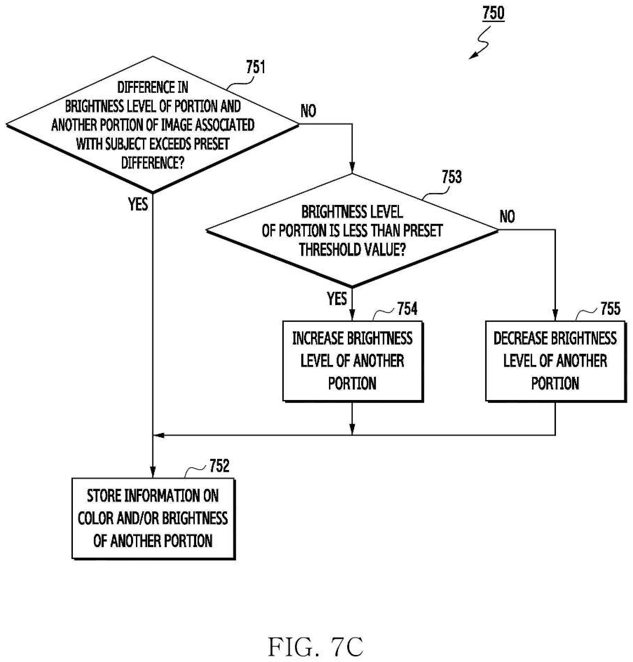

Hereinafter, with reference to FIGS. 7A, 7B and 7C (which may be referred to as FIGS. 7A to 7C), an example operation of the electronic device 101 that systematically changes a layout of the lock screen in response to an input of changing the properties of a background image of the lock screen will be described in greater detail.

FIGS. 7A, 7B, and 7C are flowcharts illustrating an example operation of an electronic device according to various embodiments. The electronic device 101 of FIGS. 1 and 2, and/or the processor 210 of FIG. 2 may perform the operation of the electronic device described with reference to FIGS. 7A to 7C. At least one of the operations of FIGS. 7A to 7C may be associated with the operation of the electronic device 101 described with reference to FIGS. 6A and/or 6B. The order in which the operations of FIGS. 7A to 7C are performed is not limited to each of the orders illustrated in FIGS. 7A to 7C. For example, the operations of FIGS. 7A to 7C may be performed in an order different from the order illustrated in FIGS. 7A to 7C, or may be performed at least partially substantially concurrently. The operations of FIGS. 7A to 7C may be performed by a processor that controls a display (e.g., the display 110 of FIG. 2) to display an edit screen provided from the lock screen application 230 of FIG. 2.

Referring to FIG. 7A, in operation 710, the processor of the electronic device according to an embodiment may recognize an image (e.g., the image 630 of FIG. 6A and/or the image 650 of FIG. 6B) to be included in a lock screen. The operation of recognizing an image may include the operation of detecting a subject associated with at least a portion of the image using an object recognition algorithm. The operation of recognizing an image may include the operation of obtaining or checking information associated with a subject from metadata (e.g., metadata stored as an exchangeable image file format (EXIF), in a case of an image having a JPEG format) of the image. Information associated with a subject stored in metadata may indicate a position, shape, and/or size of a portion (e.g., the portion 632 of FIG. 6A and/or the portion 652 of FIG. 6B) associated with the subject within the image.

Referring to FIG. 7A, in operation 720, the processor of the electronic device according to an embodiment may determine whether a portion of the image associated with the subject has been detected based on recognition of the operation 710. In case that an image is generated by capturing the sky, the image may not be associated with all of the subjects recognizable by the object recognition algorithm. In case that a portion of the image associated with the subject is not detected (720-No), the processor may bypass performing operations 730, 740, and 750. For example, the processor may perform operation 760 of FIG. 7A. In case of detecting a portion of the image associated with the subject (720-Yes), the processor may perform operation 730.

Referring to FIG. 7A, in operation 730, the processor of the electronic device according to an embodiment may determine whether a portion of the image may be separated from another portion. A portion of the operation 730 may be a foreground portion of the image associated with the subject. In case that a shape of the foreground portion has a shape of a circle, triangle, rectangle, and/or other polygon, the processor may determine that a portion of operation 730 is separable from another portion. In case that the shape of the foreground portion is relatively complex (e.g., in a shape of a tree branch), or a boundary line between the foreground portion and the background portion may not be detected, the processor may determine that a portion of the operation 730 is inseparable from another portion.

Referring to FIG. 7A, in case that a portion of the image may be separated from another portion (730-Yes), the processor may perform operation 740. In case that a portion of the image cannot be separated from another portion (730-No), the processor may perform operation 760.

Referring to FIG. 7A, in operation 740, the processor of the electronic device according to an embodiment may determine a position and/or size of a portion of the operation 720 to be displayed on the lock screen. As described above with reference to FIGS. 6A to 6B, the processor may perform the operation 740 using a category (or class, and/or type) of a subject associated with a portion, and/or a position and/or size of the portion within the image. The position of a portion of the operation 720 to be displayed on the lock screen may be associated with the position of the portion within the image and a position of at least one reference axis (e.g., the horizontal axes x1, x2, x3, x4, x5, and x6 of FIG. 6A and/or FIG. 6B) in the lock screen.

In an embodiment, the size of a portion of the operation 720 to be displayed on the lock screen may be associated with the size of the portion in the image. For example, the size of a portion of the operation 720 to be displayed on the lock screen may be associated with a size (e.g., a size of the portion occupying the sub-area 610 of FIG. 6A and/or FIG. 6B) of the portion disposed in a preview area (e.g., the preview area 130 of FIG. 6A and/or FIG. 6B) of the edit screen corresponding to the lock screen. For example, in case of displaying a foreground portion with a size less than 50% of a size of a sub-area (e.g., the sub-area 610 of FIG. 6A and/or FIG. 6B) of the preview area, the processor may enlarge the foreground portion or move the position of the foreground portion using the at least one reference axis.

Referring to FIG. 7A, in operation 750, the processor of the electronic device according to an embodiment may at least partially change a brightness level of at least a portion of an image to be displayed on the lock screen using a brightness level of a portion of the operation 720 to be displayed on the lock screen. At least a portion of the image to be displayed on the lock screen may be divided into a foreground portion and a background portion of the image detected by the operation 720.

For example, in case that the difference in brightness levels between the foreground portion and the background portion is less than a preset difference, the processor may adjust the brightness level of either the foreground portion or the background portion. The preset difference may be associated with a category of the foreground portion. For example, in case that a subject associated with the foreground portion is included in a first category for classifying animals and/or people, the processor may compare the difference in the brightness levels to a first preset difference (e.g., 45%). In case that the difference between the brightness levels is less than the first preset difference, the processor may change the brightness level of either the foreground portion or the background portion.

For example, in case that the difference between the brightness levels is less than the first preset difference, the processor may change the brightness level of the background portion based on the brightness level of the foreground portion. For example, in case that the brightness level of the foreground portion is less than 15%, the processor may adjust the brightness level of the background portion to a brightness level that is 45% greater than the brightness level of the foreground portion (e.g., increase). For example, in case that the brightness level of the foreground portion is greater than or equal to 15, the processor may adjust the brightness level of the background portion to a brightness level that is 45% lower than the brightness level of the foreground portion (e.g., decrease). For example, as in the example state of FIG. 6A, the processor that has detected the portion 632 associated with a subject corresponding to a human face may change a brightness level of at least one portion of the background portion of the portion 632 and/or the image 630 by comparing the difference in brightness levels of the background portion of the portion 632 and the image 630 to the first preset difference.

For example, in case that a subject associated with the foreground portion is included in a second category for classifying objects, the processor may compare the difference in brightness levels between the foreground portion and the background portion to a second preset difference (e.g., 50%). In case that the difference between the brightness levels is less than the second preset difference, the processor may change a brightness level of at least a portion of the foreground portion or the background portion.

For example, in case that the difference between the brightness levels is less than the second preset difference, the processor may determine whether to change the brightness level of the background portion according to the brightness level of the foreground portion. For example, in case that the brightness level of the foreground portion is less than 15%, the processor may adjust the brightness level of the background portion to a brightness level that is 45% greater than the brightness level of the foreground portion (e.g., increase). For example, in case that the brightness level of the foreground portion is greater than or equal to 15, the processor may adjust the brightness level of the background portion to a brightness level that is 45% lower than the brightness level of the foreground portion (e.g., decrease). For example, as in the example state of FIG. 6B, the processor that has detected the portion 652 associated with a subject, which is a flower pot, may change a brightness level of at least one portion of the background portion of the portion 652 and/or the image 650 by comparing the difference in brightness levels of the background portion of the portion 652 and the image 650 with the second preset difference.

Referring to FIG. 7A, in operation 760, the processor of the electronic device according to an embodiment may determine a color of at least one visual object to be displayed together with an image on the lock screen. For example, the processor may determine a color of at least one visual object using color distribution of at least a portion (e.g., a combination of the foreground portion and the background portion) of an image to be displayed on the lock screen. At least one visual object of the operation 760 may include at least one widget included in the lock screen. As described above with reference to FIGS. 6A and/or 6B, the processor may change other properties of at least one visual object different from the color of the operation 760, such as a position and/or size.

Referring to FIG. 7A, in operation 770, the processor of the electronic device according to an embodiment may display an image and at least one visual object superimposed on the image in the preview area of an edit screen. The image in the preview area displayed by the operation 770 may include a portion of the operation 720. The position and/or size of a portion of the operation 720 in the preview area may be determined by the operation 740. The brightness level of the foreground portion (e.g., a portion of the operation 720) and the background portion displayed in the preview area may be determined by the operation 750. The color of at least one visual object displayed in the preview area may be determined by the operation 760.

Hereinafter, with reference to FIGS. 7B and 7C, example operations of each of the operations 740 and 750 of FIG. 7A will be described in greater detail.

Referring to FIG. 7B, operations of the processor associated with the operation 740 of FIG. 7A are illustrated. For example, the processor may perform at least one of the operations of FIG. 7B while performing the operation 740 of FIG. 7A. Referring to FIG. 7B, in operation 741, the processor of the electronic device according to an embodiment may determine whether a subject is included in a first category for classifying animals and/or people. The operation 741 of FIG. 7B may be performed in a state where one or more subjects included in an image to be included in the lock screen are detected. Based on an image including the subject included in the first category (741-Yes), the processor may perform operation 742. In case that the subject of the operation 741 is not included in the first category (741-No), the processor may perform operation 743.

Referring to FIG. 7B, in the operation 742, the processor of the electronic device according to an embodiment may move a portion of the image associated with the subject using a reference line for aligning the subject of the first category and enlarge a portion according to a size of a preset area of the lock screen. The reference line of the operation 742 may include the horizontal axes x1, x2, and x3 of FIG. 6A. The processor may change a position of a portion of the image associated with the subject using the reference line of the operation 742. The preset area of the operation 742 may correspond to at least a portion of the lock screen set to display a foreground portion within the lock screen, such as the sub-area 610 of FIGS. 6A and/or 6B. The processor may enlarge or reduce a portion (e.g., a foreground portion) associated with the subject according to the width and/or height of the preset area of the operation 742.

Referring to FIG. 7B, in operation 743, the processor of the electronic device according to an embodiment may determine whether a subject is included in a second category for classifying objects. In case that the subject detected from the image is included in the second category (743-Yes), the processor may perform operation 744. In case that the subject detected from the image is not included in both the first category and the second category (743-No), the processor may perform operation 745.

Referring to FIG. 7B, in operation 744, the processor of the electronic device according to an embodiment may move a portion of the image associated with the subject using a reference line for aligning the subject in the second category and enlarge a portion according to the size of the preset area. The reference line of the operation 742 may include the horizontal axes x4, x5, and x6 of FIG. 6B. The operation 744 of FIG. 7B may be performed similarly to the operation 742. For example, the processor may display a portion associated with the subject of the operation 744 in a preset area (e.g., an area of the lock screen corresponding to the sub-area 610 of FIGS. 6A and/or 6B) of the lock screen set to display the foreground portion. The processor may enlarge or reduce a portion associated with the subject using the width and/or height of the preset area.

Referring to FIG. 7B, in operation 745, the processor of the electronic device according to an embodiment may determine not to enlarge or move an image. For example, in case that a subject of the image is not included in any of the first category and the second category of the operations 741 and 743, the processor may display the image in the preview area without editing (e.g., division of the foreground portion, enlargement and/or reduction of at least a portion of the image) any image by performing the operation 745.

Referring to FIG. 7C, operations of the processor associated with the operation 750 of FIG. 7A are illustrated. For example, the processor may perform at least one of the operations of FIG. 7C while performing operation 750 of FIG. 7A. Referring to FIG. 7C, in operation 751, the processor of the electronic device according to an embodiment may determine whether a difference in brightness levels of a portion of an image associated with a subject and another portion exceeds a preset difference. A portion of the operation 751 may correspond to a foreground portion of the image of the operation 751. Another portion of the operation 751 may correspond to a background portion of the image of the operation 751. The preset difference in the operation 751 may be matched to any one category associated with the subject of the operation 751, among preset categories for classifying subjects.

For example, in case that the subject of operation 751 is included in a first category for classifying people and/or animals, the preset difference of the operation 751 may be a first preset difference (e.g., 45%) corresponding to the first category. For example, in case that the subject of the operation 751 is included in a second category for classifying objects, the preset difference of the operation 751 may be a second preset difference (e.g., 50%) corresponding to the second category. In case that the difference in operation 751 exceeds the preset difference (751-Yes), the processor may perform operation 752. In case that the difference in the operation 751 is less than or equal to the preset difference (751-No), the processor may perform operation 753.

Referring to FIG. 7C, in operation 753, the processor of the electronic device according to an embodiment may determine whether a brightness level of a portion (e.g., the foreground portion) of the operation 751 is less than a preset threshold value. In case that the brightness level has a step between 0 to 255, the preset threshold value of the operation 753 may correspond to 15. The above 15 is an empirically set value, and the disclosure is not limited thereto. In case that the brightness level of the operation 753 is less than the preset threshold value (753-Yes), the processor may perform operation 754. In case that the brightness level of the operation 753 is greater than or equal to the preset threshold value (753-No), the processor may perform operation 755.

Referring to FIG. 7C, in operation 754, the processor of the electronic device according to an embodiment may increase a brightness level of another portion. For example, the processor may change a brightness level of the background portion of the image to a level that is 45 greater than a brightness level of the foreground portion.

Referring to FIG. 7C, in operation 755, the processor of the electronic device according to an embodiment may reduce the brightness level of another portion. For example, the processor may change the brightness level of the background portion of the image to a level that is 45 less than the brightness level of the foreground portion.

Referring to FIG. 7C, in the operation 752, the processor of the electronic device according to an embodiment may store information on a color and/or brightness of another portion. For example, the processor may store information associated with color distribution of the background portion. The information may include a maximum value and/or a minimum value of saturation and/or value of pixels of an image included in the background portion. The information may indicate a size and/or position of the background portion different from the foreground portion within the image. The information of the operation 752 may be used to adjust the properties of one or more widgets to be displayed with an image within the lock screen. The information of the operation 752 may be used to determine a hue of the one or more widgets. For example, the processor may determine a color of the one or more widgets using the value(brightness) of the background portion indicated by the information.

FIG. 8 is a flowchart illustrating an example operation of an electronic device according to various embodiments. The electronic device 101 of FIGS. 1 to 2, and/or the processor 210 of FIG. 2 may perform the operation of the electronic device described with reference to FIG. 8. At least one of the operations of FIG. 8 may be associated with the operations of the electronic device described with reference to FIGS. 5 and/or 7A to 7C. The order in which the operations of FIG. 8 are performed is not limited to each of the orders illustrated in FIG. 8. For example, the operations of FIG. 8 may be performed in order different from the order illustrated in FIG. 8. For example, at least two of the operations of FIG. 8 may be performed substantially concurrently. The operations of FIG. 8 may be performed by a processor that controls a display (e.g., the display 110 of FIG. 2) to display an edit screen provided from the lock screen application 230 of FIG. 2.

Referring to FIG. 8, in operation 810, the processor of the electronic device according to an embodiment may display an edit screen for changing a layout of a lock screen. By performing the operation 810, the processor may switch to any one of the states 401, 402, 403, and 404 of FIGS. 4A to 4C and the states of FIGS. 6A to 6B. The lock screen of the operation 810 may include the lock screen 160 of FIG. 1.

Referring to FIG. 8, in operation 820, the processor of the electronic device according to an embodiment may determine whether a first input for changing the properties of a visual object included in the layout has been received. The first input may include an input for changing a position, size, and/or color of the visual object described with reference to FIGS. 4A to 4C. In case that the first input is received (820-Yes), the processor may perform operation 830. In case that the first input is not received (820-No), the processor displaying the edit screen may continuously (or repeatedly) check whether the first input and/or another input different from the first input has been received.

Referring to FIG. 8, in operation 830, the processor of the electronic device according to an embodiment may display a visual object on the edit screen according to the properties changed by the first input. In order to display a visual object having the properties changed by the first input, the processor may perform the operation 830.

Referring to FIG. 8, in operation 840, the processor of the electronic device according to an embodiment may change the image displayed together with the visual object according to the properties changed by the first input. The image of the operation 840 may be an image (e.g., the image 630 of FIG. 6A and/or the image 650 of FIG. 6B) to be included in the lock screen. The processor may change the properties of an image using the properties of the visual object changed by the first input by performing at least one of the operations of FIG. 5. The properties of the image changed by the operation 840 may include a position, size, hue, saturation, value, and/or layout of an image within the lock screen. The layout of the image may include, for example, a position, size, hue, saturation, and/or value of the foreground portion of the image within the lock screen. The layout of the image may include, for example, a position, size, hue, saturation, and/or value of the background portion of the image within the lock screen.

Referring to FIG. 8, in operation 850, the processor of the electronic device according to an embodiment may determine whether a second input for changing the properties of an image included in the layout has been received. The second input may include an input for changing an image to be included in the lock screen, or changing a position and/or size of the image within the lock screen.

Referring to FIG. 8, in operation 860, the processor of the electronic device according to an embodiment may display an image on the edit screen according to the properties changed by the second input. In order to display an image having the properties changed by the second input, the processor may perform the operation 860.

Referring to FIG. 8, in operation 870, the processor of the electronic device according to an embodiment may change a visual object superimposed on an image according to the properties changed by the second input. While performing the operation 870, the processor may perform at least one of the operations described with reference to FIGS. 7A to 7C. For example, the processor may change a position, size, and/or color of at least one visual object to be displayed with an image within the lock screen according to the properties of the image changed by the second input of the operation 860.

Referring to FIG. 8, according to the first input and/or the second input received via the edit screen, the processor that has changed the layout of the lock screen may perform operation 880. In operation 880, the processor of the electronic device according to an embodiment may determine whether a third input for storing the layout displayed via a preview area of the edit screen has been received. The third input may include an input indicating selection of the visual object 132 of FIGS. 1, 4A to 4C, 6A and/or 6B. In response to an input indicating the selection of the visual object 132 of FIGS. 1, 4A to 4C, 6A and/or 6B, the processor may display a pop-up window (or a dialog window and/or a dialog message) on a display (e.g., the display 110 of FIGS. 1 and/or 2) to check whether to store the layout of the lock screen visualized by the edit screen. The third input of the operation 880 may include an input for confirming storage of the layout, received via the pop-up window. In case that the third input of the operation 880 is not received, or before receiving the third input of the operation 880 (880-No), the processor may maintain displaying the edit screen of the operation 810. While the edit screen is displayed, the processor may repeatedly change a layout of the lock screen in response to the first input and/or the second input. In case that the third input of the operation 880 is received (880-Yes), the processor may perform operation 890.

Referring to FIG. 8, in operation 890, the processor of the electronic device according to an embodiment may store a layout to provide a lock screen having a layout at the time of receiving the third input. The layout may be stored as at least a portion of a setting value managed by the lock screen application 230 of FIG. 2. After the operation 890, when a state of the electronic device is switched to a low power state and/or a lock state, the processor may display a lock screen having a layout stored in a memory (e.g., the memory 215 of FIG. 2) of the electronic device based on the operation 890.

Hereinafter, with reference to FIGS. 9A and/or 9B, an example operation of an electronic device displaying a lock screen having an edited (or stored) layout based on the operation described with reference to FIGS. 1 to 8 will be described in greater detail.

FIGS. 9A and 9B are diagrams illustrating example states 901, 902, and 903 of an electronic device 101 displaying a lock screen according to various embodiments. The electronic device 101 of FIGS. 1 and 2, and/or the processor 210 of FIG. 2 may perform the operation of the electronic device 101 described with reference to FIGS. 9A and 9B. The operation of the electronic device 101 described with reference to FIGS. 9A and 9B may be associated with the operation of the electronic device 101 described with reference to FIGS. 1 to 8.

Referring to FIGS. 9A and/or 9B, the example states 901, 902, and 903 of the electronic device 101 corresponding to any one of the states 320 and 330 of FIG. 3 are illustrated. The state 901 of FIGS. 9A and/or 9B may be included in the state 330 of FIG. 3 configured to display a lock screen. In the example state 901 of FIG. 9A, the electronic device 101 may display a lock screen on a display 110. The lock screen may have a layout set by the operation described with reference to FIGS. 1 to 8. For example, the lock screen may include an image 916 including a foreground portion 917, and visual objects 911, 912, 913, 914, and 915 superimposed on the image 916.

In an embodiment, the electronic device 101 may display a widget (e.g., the visual objects 911 and 912) provided from a software application set to be executed in a lock state, superimposed on the image 916. For example, the visual object 911 may be a widget (e.g., a clock widget) generated based on the execution of a software application for counting the current time. For example, the visual object 912 may be a widget generated based on the execution of a software application for notifying an event (e.g., a notification message and/or a push message) that has occurred in the electronic device 101.

In an embodiment, the electronic device 101 may display a shortcut (e.g., the visual objects 913, 914, and 915) for executing software applications that are allowed access in the lock state, superimposed on the image 916. For example, the visual object 913 may be included in the lock screen as a shortcut key for executing a software application for an emergency call. For example, the visual object 914 may be included in the lock screen as a shortcut key for executing a software application for a phone call. For example, the visual object 915 may be included in the lock screen as a shortcut key for executing a software application for capturing an image and/or video.

Since the lock screen displayed within the state 901 of FIG. 9A has a layout based on the operation described with reference to FIGS. 1 to 8, the image 916, and the visual objects 911, 912, 913, 914, and 915 of the lock screen may have a position, size, and/or color associated with each other. For example, a color of at least one of the visual objects 911, 912, 913, 914, and 915 may be associated with a color of at least a portion (e.g., the foreground portion 917 and/or a background portion of the image 916 different from the foreground portion 917) of the image 916. For example, positions and/or sizes of at least one of the visual objects 911, 912, 913, 914, and 915 may be associated with a position and/or size of the foreground portion 917 within the lock screen. For example, at least a portion of the image 916 included in the lock screen may be associated with the positions and/or sizes of the visual objects 911, 912, 913, 914, and 915.

The states 902 and 903 of FIGS. 9A and/or 9B may be included in the state 320 of FIG. 3. The states 902 and 903 of FIGS. 9A and/or 9B may be a state while the processor of the electronic device 101 enters a low power state. Within the states 902 and 903 of FIGS. 9A and/or 9B, a screen displayed on the display 110 may be referred to as an AOD screen. From a perspective of having a layout linked with the lock screen displayed in the lock state before entering the low power state, the AOD screen may be referred to as a second lock screen.

In the example state 902 of FIG. 9A, the electronic device 101 may display the visual objects 911 and 912 having a color associated with a representative color of the image 916 displayed on the lock screen on the display 110. For example, a hue, saturation, and/or value of the visual objects 911 and 912 displayed on the display 110 within the state 902 may correspond to a hue, saturation, and/or value of the visual objects 911 and 912 displayed on the display 110 within the state 901. The disclosure is not limited thereto, and the hue, saturation, and/or value of the visual objects 911 and 912 within the state 902 may differ from the hue, saturation, and/or value of the visual objects 911 and 912 within the state 901 by a preset margin and/or a preset ratio. For example, the electronic device 101 may display the visual object 911 within the state 902, which has a hue that is darker by a preset ratio than the hue of the visual object 911 within the state 901. Referring to FIG. 9A, within the state 902, the electronic device 101 may display only the visual objects 911 and 912 among the image 916 and the visual objects 911 and 912 on the display 110. Within the state 902 displaying the visual objects 911 and 912, a remaining portion 920 different from a portion of a display area where the visual objects 911 and 912 are displayed may be filled with black. For example, the electronic device 101 may deactivate or turn off pixels corresponding to the remaining portion 920 among pixels of the display 110.

Within the state 903 of FIG. 9B, the electronic device 101 may display, on the display 110, an AOD screen including the foreground portion 917 of the image 916 associated with a subject, and one or more visual objects (e.g., the visual objects 911 and 912). Within the state 903 of displaying the AOD screen including the foreground portion 917 and the visual objects 911 and 912, a portion 930 of the AOD screen that is different from the foreground portion 917 and the visual objects 911 and 912 may be filled with a preset color. For example, the portion 930 of an image different from the foreground portion 917 may be replaced or overwritten with the preset color.

In an embodiment in which the display 110 of the electronic device 101 corresponds to an OLED, the portion 930 of the AOD screen may be filled with black in order to preserve the life of the OLED. For example, the preset color displayed on the portion 930 different from the foreground portion 917 may be black. In order to represent the preset color that is black, the electronic device 101 may control the display 110 to deactivate pixels of the display 110 corresponding to a background portion different from the foreground portion 917 within the state 903 of displaying the AOD screen.

Within the example state 903 of FIG. 9B, a color of the visual objects 911 and 912 included in the AOD screen may correspond to a color of the visual objects 911 and 912 within the state 901 and/or the state 902. Within the state 903 of FIG. 9B, a hue, saturation, and/or value of the foreground portion 917 included in the AOD screen may be associated with a hue, saturation, and/or value of the foreground portion 917 within the state 901. For example, the hue, saturation, and/or value of the foreground portion 917 within the state 903 may match the hue, saturation, and/or value within the state 901. The disclosure is not limited thereto, and the hue, saturation, and/or value of the foreground portion 917 within the state 903 may differ by a preset offset, and/or a preset ratio than the hue, saturation, and/or value within the state 901.

As described above, the electronic device 101 according to an embodiment may display a lock screen that may be personalized by a user within a lock state including a low power state of the processor. A layout of the lock screen may be changed via an edit screen provided in another state different from the lock state. While displaying the edit screen, in response to an input of changing the properties (e.g., position, size, and/or color) of a specific element (e.g., background image and/or widget) of the layout, the electronic device 101 may change the properties (e.g., position, size, and/or color) of another element of the layout.

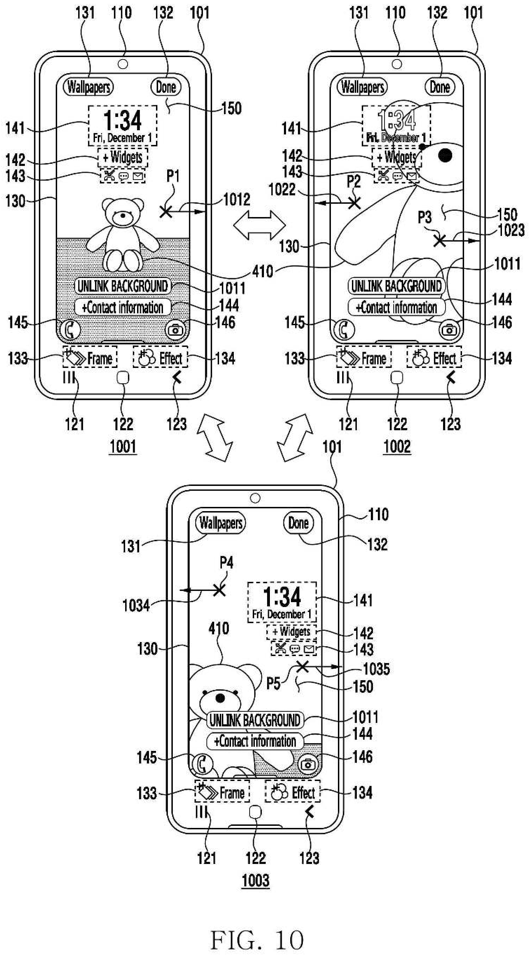

FIG. 10 illustrates example states 1001, 1002, and 1003 of an electronic device 101 displaying an edit screen according to various embodiments. The electronic device 101 of FIGS. 1 to 2, and/or the processor 210 of FIG. 2 may perform the operation of the electronic device 101 described with reference to FIG. 10. The operation of the electronic device 101 described with reference to FIG. 10 may be associated with the operation of the electronic device 101 described with reference to FIGS. 5, 7A to 7C, and/or 8.

Referring to FIG. 10, the example states 1001, 1002, and 1003 of the electronic device 101 displaying an edit screen on a display 110 are illustrated. The electronic device 101 may display example screens of FIG. 10 while executing the lock screen application 230 of FIG. 2 within an active state (e.g., the state 340 of FIG. 3). The example screens of FIG. 10 may be referred to as an edit screen. The edit screen may be displayed in response to an input for changing a layout of a lock screen.

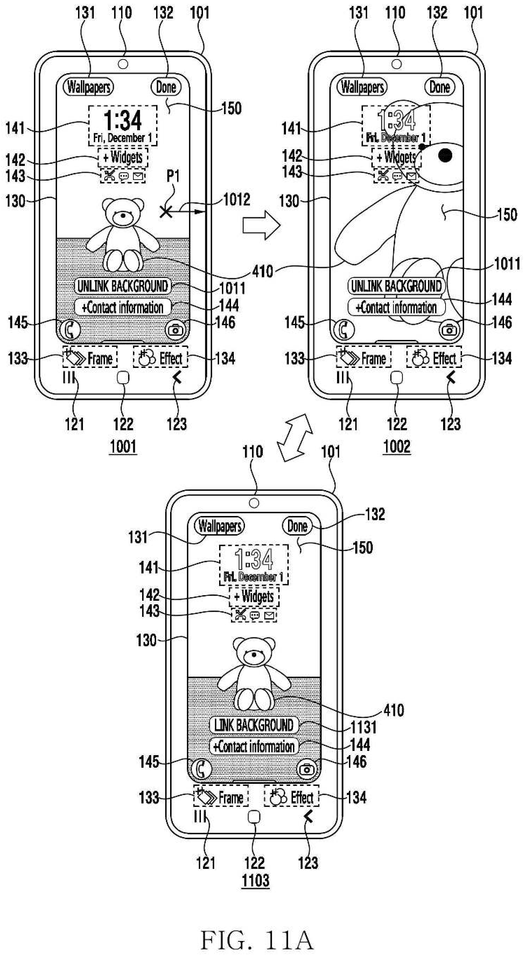

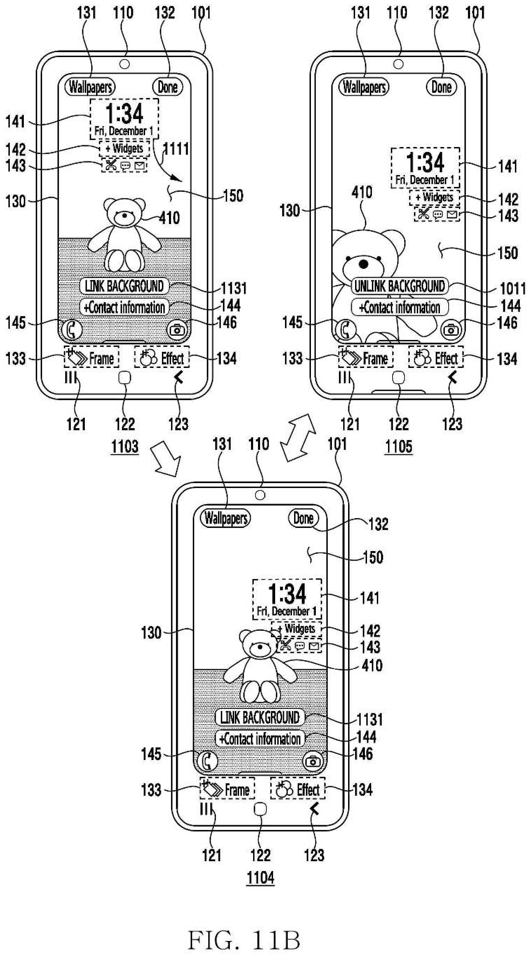

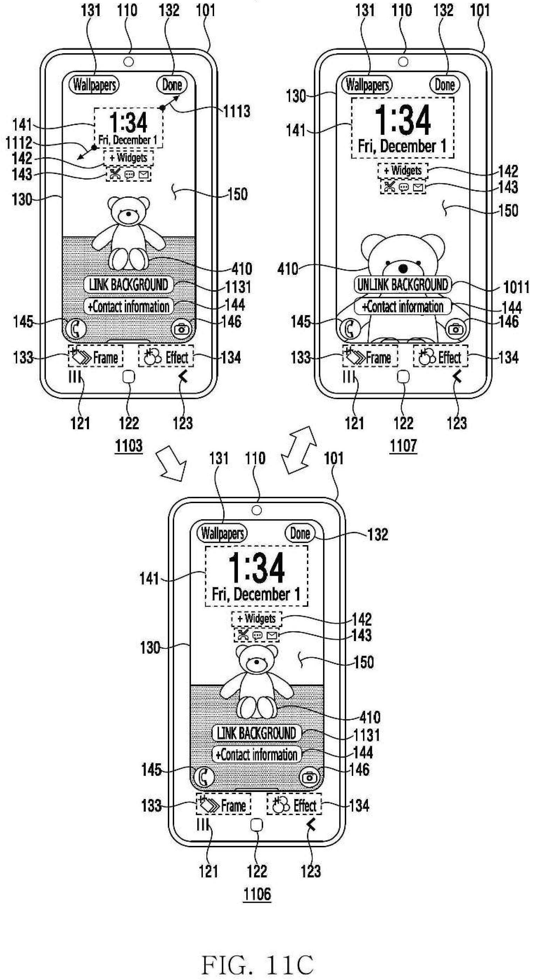

Referring to FIG. 10, within the state 1001 of displaying an edit screen, the electronic device 101 may provide a preview with respect to a lock screen including a background image and/or one or more widget objects via a preview area 130. For example, the preview area 130 may include an image 150 corresponding to the background image. For example, the preview area 130 may include visual objects 141, 143, 144, 145, and 146 corresponding to each of the widget objects. For example, the preview area 130 may include visual objects 142 for adding or deleting a widget object to be included in the lock screen. The electronic device 101 may provide an option for adjusting the link of the background image and the widget object via the edit screen. Referring to FIG. 10, the electronic device 101 may display a visual object 1011 configured to receive an input associated with the option on the preview area 130. The operation of the electronic device 101 associated with the visual object 1011 will be described with reference to FIGS. 11A, 11B and 11C (which may be referred to as FIGS. 11A to 11C). Referring to FIG. 10, the visual object 1011 is illustrated, including example text such as "Unlink background" and having a form of a button, but a shape and/or position of the visual object 1011 is not limited thereto.

In an embodiment, the electronic device 101 may provide or recommend a plurality of candidate layouts with respect to the lock screen via the preview area 130. The electronic device 101 may provide, as the candidate layouts, possible combinations of a positional relationship and/or colors of the visual object (e.g., the visual objects 141, 143, 144, 145, and 146) included in the preview area 130 to indicate the widget object to be included in the lock screen, and a source image at least partially provided via the preview area 130. The electronic device 101 may display one of the candidate layouts via the edit screen (or the preview area 130 of the edit screen). Within the state 1001 in which any one of the candidate layouts is displayed, the electronic device 101 may receive an input for replacing or changing the candidate layout displayed via the edit screen.

Referring to FIG. 10, in the preview area 130, the example state 1001 is illustrated, which displays the image 150 corresponding to a first portion of the source image and the visual objects 141, 143, 144, 145, and 146 corresponding to widget objects, respectively. Within the state 1001, the electronic device 101 may receive a swipe gesture performed on the preview area 130. The swipe gesture may include a drag gesture performed along a horizontal axis of the preview area 130. The swipe gesture may include a drag gesture started on the image 150 displayed via the preview area 130. The swipe gesture may be performed by a user to change the candidate layout displayed via the edit screen (or the preview area 130). In response to the swipe gesture, the electronic device 101 may change the candidate layout (or the layout) of the lock screen displayed via the preview area 130.

In the example state 1001 of FIG. 10, in response to a drag gesture (e.g., the swipe gesture) that starts at a location p1 in the preview area 130 and is performed along a direction 1012 (e.g., a direction parallel to the horizontal axis), the electronic device 101 may switch to the state 1002. Within the state 1002, the electronic device 101 may display a second portion of the source image, which is different from the first portion of the source image, displayed within the state 1001, in the preview area 130. Together with the second portion, the electronic device 101 may display the visual objects 141, 143, 144, 145, and 146 respectively corresponding to widget objects to be displayed on the lock screen.

Within the state 1002, the electronic device 101 may display a portion 410 associated with a subject (e.g., a teddy bear) detected in the source image, by enlarging the portion 410 according to the operation of FIGS. 7A and/or 7B. Referring to the state 1002 of FIG. 10, the electronic device 101 may display another portion (e.g., the background portion) of the source image different from the portion 410 according to a color, saturation, and/or brightness adjusted to emphasize the portion 410, within the image 150 including the enlarged portion 410.

Within the state 1002, the electronic device 101 may display the visual objects 141, 142, 143, 144, 145, and 146 having a position and/or color adjusted based on a layout of the image 150, superimposed on the image 150 that at least partially corresponds to the source image. For example, positions and/or colors of visual objects 141, 142, 143, 144, 145, and 146 within the preview area 130 may be changed or determined based on the operations of FIGS. 7A to 7C and/or 8. The colors of the visual objects 141, 142, 143, 144, 145, and 146 displayed by the electronic device 101 within the state 1002 may be different from the colors of the visual objects 141, 142, 143, 144, 145, and 146 displayed by the electronic device 101 within the state 1001, respectively.

In an embodiment of receiving an input for changing the candidate layout displayed via the preview area 130 via the swipe gesture, the electronic device 101 may change the candidate layout to be provided via the preview area 130 among a plurality of candidate layouts according to a direction of the swipe gesture. For example, within the state 1002, in response to the swipe gesture (or the drag gesture), which starts at a point p2 in the preview area 130 and is performed along a direction 1022 (e.g., a direction parallel to the horizontal axis and facing left), the electronic device 101 may switch to, or return to the state 1001. For example, within the state 1002, in response to the swipe gesture that starts at a point p3 in the preview area 130 and is performed along a direction 1023 (e.g., a direction parallel to the horizontal axis and facing right), the electronic device 101 may switch to the state 1003. Example operations of the electronic device 101 with respect to the swipe gestures according to the directions 1022 and 1023 parallel to the horizontal axis and opposite to each other are described, but the disclosure is not limited thereto. For example, the electronic device 101 may perform the operation for changing and/or replacing the candidate layout described with reference to FIG. 10 in response to a swipe gesture parallel to a vertical axis.

Referring to FIG. 10, the state 1003 that provides a candidate layout different from the candidate layouts displayed in each of the states 1001 and 1002 is illustrated. Within the state 1003, the electronic device 101 may display a third portion of the source image, which is cropped differently from the portions of the source image displayed in the states 1001 and 1002, in the preview area 130. For example, via the preview area 130, the electronic device 101 may display the image 150 that includes the portion 410 positioned on a left side (e.g., a position corresponding to the vertical axis x1 of FIG. 6A) of the preview area 130. The electronic device 101 may change or determine a color, saturation, and/or brightness of a background portion different from the portion 410 in the image 150 according to a color, saturation, and/or brightness of the portion 410.

Within the preview area 130, the electronic device 101 may display the visual objects 141, 143, 144, 145 and 146 respectively corresponding to the widget objects to be displayed on the lock screen, superimposed on the image 150 corresponding to the third portion. Within the preview area 130, the electronic device 100 may display the visual object 142 for adding a widget object to the lock screen. Positions, sizes, and/or colors of the visual objects 141, 142, 143, 144, 145, and 146 displayed by the electronic device 101 within the state 1003 may be different from positions, sizes, and/or colors of the visual objects 141, 142, 143, 144, 145, and 146 displayed by the electronic device 101 within a state different from the state 1003. For example, the electronic device 101 may display the visual objects 141, 142, 143, 144, 145, and 146 positioned on a right side of the preview area 130 superimposed on the image 150 including the portion 410 positioned on the left side of the preview area 130. Within the state 1003 of FIG. 10, similar to the state 403 of FIG. 4B, the electronic device 101 may display the visual objects 141, 142, 143, 144, 145, and 146 aligned along a right edge of the preview area 130.

Referring to FIG. 10, within the state 1003, the electronic device 101 may receive an input for changing the candidate layout displayed via the preview area 130. For example, in response to a swipe gesture that starts at a point p4 in the preview area 130 and is performed along a direction 1034 toward the left parallel to the horizontal axis, the electronic device 101 may switch or return from the state 1003 to the state 1002. For example, in response to a swipe gesture that starts at a point p5 in the preview area 130 and is performed along a direction 1035 toward the right parallel to the horizontal axis, the electronic device 101 may switch to a state to provide another candidate layout different than the candidate layout displayed within the state 1003. Referring to FIG. 10, an embodiment of the electronic device 101 switching from the state 1003 to the state 1001 in response to a swipe gesture performed along the direction 1035 is illustrated, but the disclosure is not limited thereto. For example, in order to provide candidate layouts that exceed three candidate layouts respectively corresponding to the states 1001, 1002, and 1003, the electronic device 101 may switch to another state different from the states 1001, 1002, and 1003 in response to the swipe gesture performed along the direction 1035.

Referring to FIG. 10, while providing a plurality of candidate layouts via an edit screen, electronic device 101 may receive an input for determining the candidate layout provided via the edit screen as a layout of a lock screen. For example, the input may include an input (e.g., a touch input on a visual object 132) indicating selection of a visual object 132. In response to the input, the electronic device 101 may determine the candidate layout displayed via the preview area 130 as the layout of the lock screen. For example, in case of receiving an input indicating the selection of the visual object 132 within the state 1002, the electronic device 101 may store a combination of the image 150 and the visual objects 141, 143, 144, 145, and 146 displayed via the preview area 130 within the state 1002 as the layout of the lock screen. In case of switching to a lock state after receiving the input, the electronic device 101 may display the lock screen based on the stored layout on the display 110.

Hereinafter, with reference to FIGS. 11A to 11C, an example operation of the electronic device 101 associated with the visual object 1011 of FIG. 10 will be described in greater detail.

FIGS. 11A, 11B, and 11C illustrate example states of an electronic device displaying an edit screen according to various embodiments. The electronic device 101 of FIGS. 1 to 2, and/or the processor 210 of FIG. 2 may perform the operation of the electronic device 101 described with reference to FIGS. 11A to 11C. The operation of the electronic device 101 described with reference to FIGS. 11A to 11C may be associated with the operation of the electronic device 101 described with reference to FIGS. 5, 7A to 7C, and/or 8.

Referring to FIGS. 11A to 11C, example states 1001, 1002, 1103, 1104, 1105, 1106, and 1107 of the electronic device 101 displaying an edit screen are illustrated. The electronic device 101 may receive an input for adjusting a position and/or size of any one of a background image and/or widget objects included in a lock screen while providing a preview with respect to the lock screen via the edit screen. For example, in response to the input associated with the widget object, the electronic device 101 may change the position and/or size of the background image. For example, in response to the input associated with the background image, the electronic device 101 may change the position and/or size of the widget object. Whether to control all of the background image and the widget object in response to a single input may be changed based on an input associated with a visual object 1011.

Referring to FIG. 11A, in response to the single input (e.g., a swipe gesture, started at a point p1 and performed along the direction 1012) received within the state 1001, the electronic device 101 may change all of an image 150 corresponding to the background image of the lock screen and a visual object (e.g., visual objects 141, 143, 144, 145, and 146) corresponding to the widget object of the lock screen. For example, as in the state 1002, the electronic device 101 may change colors of the visual objects 141, 143, 144, 145, and 146 and change the image 150. Within the state 1002, in response to an input associated with the visual object 1011, the electronic device 101 may stop changing the widget object and the background image by linking the widget object and the background image. Within the example state 1002 of FIG. 11A, the electronic device 101 may switch to the state 1103 in response to an input associated with the visual object 1011.

In the state 1103 of FIG. 11A, the electronic device 101 may display a visual object 1131 for changing the widget object and the background image by linking the widget object and the background image. For example, the electronic device 101 switching from the state 1002 to the state 1103 may stop displaying the visual object 1011 and display the visual object 1131 at the position where the visual object 1011 was displayed. Referring to FIGS. 11A to 11C, the visual object 1131 including example text such as "Link background" and having the form of a button is illustrated, but a shape and/or position of the visual object 1131 is not limited thereto. In response to an input indicating selection of the visual object 1131, the electronic device 101 may switch from the state 1103 to the state 1002, and may change a position and/or size of another one of the widget object or the background image in response to an input for moving either the widget object or the background image.

Within the switched state 1103 based on an input associated with the visual object 1011, in response to an input associated with the widget object and/or the background image, the electronic device 101 may move only an object (e.g., the widget object and/or the background image) associated with the input, and refrain from changing a position and/or size of another object. Referring to FIG. 11B, within the state 1103, the electronic device 101 may receive an input for moving the visual object 141 corresponding to a specific widget object (e.g., a clock widget) along a path 1111. The input may include a drag gesture performed along the path 1111. In response to the input, the electronic device 101 may switch from the state 1103 to the state 1104. Unlike the operation of changing the image 150 in the preview area 130 according to an input for moving the visual object 141 along a path 431 described with reference to FIG. 4B, the electronic device 101 may move the visual object 141 (or other visual objects 142 and 143 linked with the visual object 141) and maintain the image 150 in the preview area 130. For example, the electronic device 101 may maintain or display the image 150 corresponding to a specific portion of a source image while switching from the state 1103 to the state 1104 based on the input.

Referring to FIG. 11B, within the state 1104 after receiving an input of moving the visual object 141 along the path 1111, the electronic device 101 may change the image 150 in response to an input associated with the visual object 1131. In response to an input associated with the visual object 1131, received within the state 1104, the electronic device 101 may switch to the state 1105. In case of switching from the state 1104 to the state 1105, the electronic device 101 may stop or refrain from displaying the visual object 1131. In case of switching from the state 1104 to the state 1105, the electronic device 101 may display the visual object 1011. The visual object 1011 may be displayed based on a position where the visual object 1131 was displayed and/or a size of the visual object 1131.

While switching from the state 1104 to the state 1105 based on the input, the electronic device 101 may perform cropping on the source image again using a positional relationship between the visual objects 141, 142, 143, 144, 145, and 146 and a portion 410 associated with a subject within the preview area 130. Referring to FIG. 11B, within the state 1105 displaying the positions of the visual objects 141, 142 and 143 aligned at a right edge within the preview area 130, the electronic device 101 may display the image 150 obtained by cropping (or editing) the source image such that the portion 140 associated with a subject is aligned at a left edge within the preview area 130. For example, in response to an input associated with the visual object 1131, the electronic device 101 may switch to the state 1105 in which all of the visual object 1131 and the image 150 have changed, similar to switching from the state 401 to the state 403 of FIG. 4B.

Referring to FIG. 11C, within the state 1103, the electronic device 101 may receive an input for changing a size of the visual object 141. For example, the electronic device 101 may identify or detect a gesture (e.g., a hand gesture, such as pinch-to-zoom gesture) that is indicated by external objects being concurrently dragged along paths 1112 and 1113. In response to the input, the electronic device 101 may enlarge the visual object 141 within the preview area 130, such as in the state 1106. Referring to the state 1106 of FIG. 11C, unlike the operation of adjusting the image 150 in response to an input indicating enlargement of the visual object 141 described with reference to FIG. 4C, the electronic device 101 may enlarge only the size of the visual object 141 and refrain from adjusting the image 150.

Referring to FIG. 11C, the electronic device 101 may resume changing or recommending a layout of the lock screen displayed via the preview area 130 in response to an input associated with the visual object 1131. For example, within the state 1106, the electronic device 101 that has received an input associated with the visual object 1131 may switch to the state 1107. When switching from the state 1106 to the state 1107, the electronic device 101 may change a position and/or size of the portion 410 associated with a subject in the preview area 130 using a position and/or size of the enlarged visual object 141 in the preview area 130. The electronic device 101 that changes the position and/or size of the portion 410 associated with a subject may change a color, saturation, and/or brightness of a background portion different from the portion 410 in the preview area 130 according to the position and/or size of the portion 410 in the preview area 130.

Referring to FIG. 11C, when switching from the state 1106 to the state 1107, the electronic device 101 may stop displaying the visual object 1131 and display the visual object 1011 again. After switching to the state 1107 of displaying an edit screen including the visual object 1011, in response to an input for changing a position and/or size of any one of the widget object or the background image, the electronic device 101 may change a position and/or size of another one of the widget object or the background image.

As described above, the electronic device 101 according to an embodiment may determine, or change, based on an input with respect to any one of the background image and the widget object using the visual object 1011, whether to change another one of the background image and the widget object. For example, using the visual object 1011, the electronic device 101 may determine, or change, whether to recommend a layout of the lock screen, based on the input. For example, within the state 1002 of FIG. 11A, the electronic device 101 may receive an input to stop a function of changing the widget object and the background image by linking the widget object and the background image, and/or a function of recommending a layout of the lock screen in response to a user input, via the visual object 1011. For example, within the state 1103 of FIGS. 11A to 11C, the electronic device 101 may receive an input for activating a function of changing the widget object and the background image by linking the widget object and the background image, and/or a function of recommending a layout of the lock screen in response to the user input, via the visual object 1131.

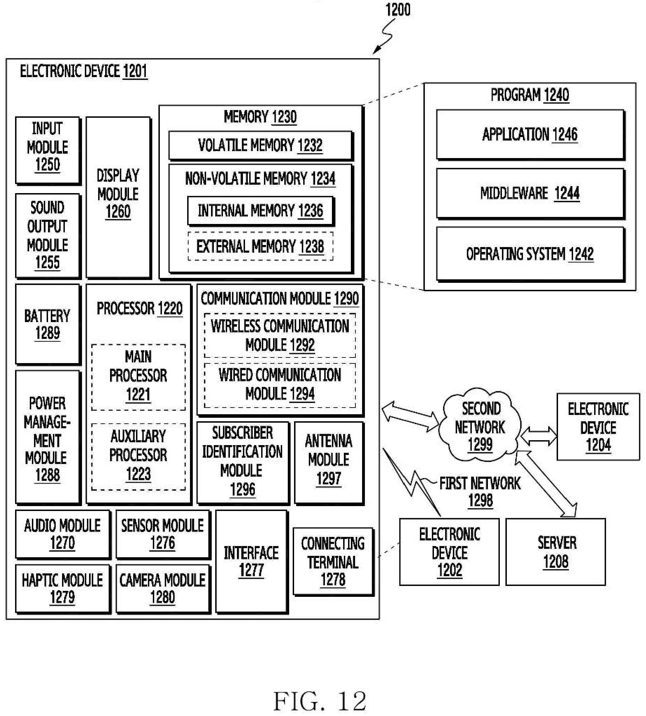

FIG. 12 is a block diagram illustrating an example electronic device 1201 in a network environment 1200 according to various embodiments. Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In various embodiments, at least one of the components (e.g., the connecting terminal 1278) may be omitted from the electronic device 1201, or one or more other components may be added in the electronic device 1201. In various embodiments, some of the components (e.g., the sensor module 1276, the camera module 1280, or the antenna module 1297) may be implemented as a single component (e.g., the display module 1260).

The processor 1220 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element including a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In an embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), the element may be coupled with the other element directly (e.g., wiredly), wirelessly, or via a third element.

As used in connection with various embodiments of the disclosure, the term "module" may include a unit implemented in hardware and may interchangeably be used with other terms, for example, "logic," "block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1201 of FIG. 12 may be an example of the electronic device 101 described with reference to FIGS. 1 to 8, 9A to 9B, 10, and 11A to 11C.

In an example embodiment, a method may be required to provide an edit screen for changing a layout of a lock screen. In an embodiment, while editing the layout of the lock screen using the edit screen, a method of adaptively changing a positional relationship between an image included in the layout and at least one visual object may be required. An electronic device (e.g., the electronic device 101 of FIG. 1 and/or the electronic device 1201 of FIG. 12) according to an example embodiment may comprise: a display (e.g., the display 110 of FIG. 1), at least one processor (e.g., the processor 210 of FIG. 2), comprising processing circuitry, and memory (e.g., the memory 215 of FIG. 2) comprising one or more storage media, storing instructions. At least one processor individually or collectively, may be configured to execute the instructions and to cause the electronic device to: display, based on a first input for changing a layout of a lock screen (e.g., the lock screen 160 of FIG. 1), an edit screen associated with the layout of the lock screen including an image (e.g., the image 150 of FIG. 1) and a visual object (e.g., the visual objects 141, 142, 143, 144, 145, and 146 of FIG. 1) superimposed on the image, on the display. At least one processor, individually or collectively, may be configured to execute the instructions and to cause the electronic device to display, based on a second input for adjusting a position or size of the visual object received via the edit screen, the visual object in the edit screen using a position or size indicated by the second input. At least one processor, individually or collectively, may be configured to execute the instructions and to cause the electronic device to change a position or size of the image of the edit screen according to a position or size linked with the position or the size of the visual object adjusted by the second input. The electronic device according to an embodiment may provide an edit screen for changing the layout of the lock screen. The electronic device according to an embodiment may adaptively change a positional relationship between the image and at least one visual object included in the layout while editing the layout of the lock screen using the edit screen.

For example, at least one processor individually or collectively, may be configured to cause the electronic device to display, based on a third input for adjusting the position or size of the image received via the edit screen, the image in the edit screen using a position or size indicated by the third input. At least one processor individually or collectively, may be configured to cause the electronic device to change the position or size of the visual object in the edit screen according to a position or size linked with the position or the size of the image adjusted by the third input.

For example, at least one processor individually or collectively, may be configured to cause the electronic device to: display, after receiving a fourth input for storing the layout adjusted by the second input or the third input via the edit screen, based on a state of at least one processor being switched to a specified state for displaying the lock screen, the lock screen having the stored layout on the display.

For example, at least one processor individually or collectively, may be configured to: cause the electronic device to determine a position where the visual object will be displayed using color distribution of pixels included in a preview area of the edit screen among pixels of the image. At least one processor individually or collectively, may be configured to cause the electronic device to determine a color of the visual object using the color distribution of the pixels of the image corresponding to the determined position.

For example, the lock screen may be a first lock screen. At least one processor individually or collectively, may be configured to cause the electronic device to control, based on at least one processor entering a low power state, the display, to display a second lock screen including a portion of the image associated with a subject and the visual object. Within the second lock screen, another portion of the image different from the subject may be filled with a specified color.

For example, at least one processor individually or collectively, may be configured to cause the electronic device to control the display to deactivate one or more pixels corresponding to the other portion of the image, based on displaying the second lock screen to represent the specified color, the specified color being black.

For example, at least one processor individually or collectively, may be configured to cause the electronic device to move a position of a portion of the image associated with a subject in a preview area of the edit screen based on a reference position, in response to the second input.

For example, at least one processor individually or collectively, may be configured to cause the electronic device to adjust a height of a portion of the image associated with a subject in a preview area of the edit screen of the lock screen to a specified height, in response to the second input.

In an example embodiment, a method of an electronic device including a display may be provided. The method may comprise, based on a first input for changing a layout of a lock screen, displaying an edit screen associated with the layout of the lock screen including an image and a visual object superimposed on the image, on the display. The method may comprise, based on a second input for adjusting a position or size of the visual object received via the edit screen, displaying the visual object in the edit screen using the position or size indicated by the second input. The method may comprise changing a position or size of the image in the edit screen according to a position or size linked with the position or the size of the visual object adjusted by the second input.

For example, the method may comprise, based on a third input for adjusting the position or size of the image received via the edit screen, displaying the image in the edit screen using the position or size indicated by the third input. The method may comprise changing a position or size of the visual object in the edit screen according to a position or size linked with the position or the size of the image adjusted by the third input.

For example, the method may comprise: based on receiving a fourth input for storing the layout adjusted by the second input or the third input via the edit screen, based on a state of at least one processor of the electronic device being switched in a specified state for displaying the lock screen, displaying the lock screen having the stored layout on the display.

For example, changing the position or the size of the visual object may comprise determining a position where the visual object will be displayed using color distribution of pixels included in a preview area of the edit screen among pixels of the image. The method may comprise determining a color of the visual object using the color distribution of the pixels of the image corresponding to the determined position.

For example, the lock screen may be a first lock screen. The method may comprise, based on at least one processor of the electronic device entering a low power state, controlling the display to display a second lock screen including a portion of the image associated with a subject and the visual object. Within the second lock screen, another portion of the image different from the subject may be filled with a specified color.

For example, controlling the display to display the second lock screen, may comprise, based on displaying the second lock screen to represent the specified color, the specified color being black, controlling the display to deactivate one or more pixels corresponding to the other portion of the image.

For example, changing the position or the size of the image may comprise, in response to the second input, moving a position of a portion of the image associated with a subject in a preview area of the edit screen, based on a reference position.

For example, changing the position or the size of the image may comprise, in response to the second input, adjusting a height of a portion of the image associated with a subject in a preview area of the edit screen of the lock screen to a specified height.

In an embodiment as described above, a non-transitory computer-readable storage medium storing instructions may be provided. The instructions, when executed by at least one processor, comprising processing circuitry, of an electronic device including a display, individually and/or collectively, may cause the electronic device to: display, based on a first input for changing a layout of a lock screen, an edit screen associated with the layout of the lock screen including an image and a visual object superimposed on the image on the display. The instructions, when executed by at least one processor, may cause the electronic device to display, based on a second input for adjusting a position or size of the visual object received via the edit screen, the visual object in the edit screen using the position or size indicated by the second input. The instructions, when executed by at least one processor, may cause the electronic device to change a position or size of the image in the edit screen according to a position or size linked with the position or the size of the visual object adjusted by the second input.

For example, the instructions, when executed by at least one processor, individually and/or collectively, may cause the electronic device to: display, based on a third input for adjusting a position or size of the image received via the edit screen, the image in the edit screen using the position or size indicated by the third input. The instructions, when executed by at least one processor, may cause the electronic device to change a position or size of the visual object in the edit screen according to a position or size linked with the position or the size of the image adjusted by the third input.

For example, the instructions, when executed by at least one processor, individually and/or collectively, may cause the electronic device to: display, based on receiving a fourth input for storing the layout adjusted by the second input or the third input via the edit screen, based on at least one processor being switched in a specified state for displaying the lock screen, the lock screen having the stored layout on the display.

For example, the instructions, when executed by at least one processor, individually and/or collectively, may cause the electronic device to: determine a position where the visual object will be displayed using color distribution of pixels included in a preview area of the edit screen among pixels of the image. The instructions, when executed by at least one processor, may cause the electronic device to determine a color of the visual object using the color distribution of the pixels of the image corresponding to the determined position.

An electronic device according to an example :embodiment may comprise a display, at least one processor, comprising processing circuitry, and memory comprising one or more storage media, storing instructions. At least one processor individually or collectively, may be configured to execute the instructions and to cause the electronic device to: receive a first input for displaying an edit screen for editing a lock screen. At least one processor, individually or collectively, may be configured to execute the instructions and to cause the electronic device to concurrently display in the edit screen displayed in response to the first input, a first background image of the lock screen and a widget object corresponding to a widget of the lock screen. The first background image may include a visual object region obtained using a source image. The widget object may be at least partially superimposed on the first background image. At least one processor, individually or collectively, may be configured to execute the instructions and to cause the electronic device to receive, while concurrently displaying the first background image and the widget object, via the edit screen, a second input for moving the widget object. At least one processor, individually or collectively, may be configured to execute the instructions and to cause the electronic device to edit, in response to releasing the second input corresponding to the widget object moved to at least partially superimposed on the visual object region included in the first background image, the lock screen configured to obtain a second background image using the source image such that the visual object region is positioned away from the widget object moved by the second input. The second background image may be displayed in the lock screen, with the widget moved according to the second input. At least one processor, individually or collectively, may be configured to execute the instructions and to cause the electronic device to edit, in response to releasing the second input corresponding to the widget object moved to a location spaced apart from the visual object region included in the first background image, the lock screen using the first background image to be displayed in the lock screen with the widget moved according to the second input.

For example, the first background image may correspond to a first cropped portion of the source image and the second background image may correspond to a second cropped portion of the source image.

For example, a size and/or position of the first cropped portion associated with the source image may be different from a size and/or position of the second cropped portion associated with the source image.

For example, at least one processor individually or collectively, may be configured to cause the electronic device to: receive a third input for adjusting a position of the first background image received via the edit screen. At least one processor individually or collectively, may be configured to cause the electronic device to edit, based on the visual object region included in the first background image moved by the third input to be superimposed on the widget object, the lock screen configured to obtain a third background image using the source image such that the visual object region is positioned away from the widget object moved by the third input.

For example, at least one processor individually or collectively, may be configured to cause the electronic device to display, based on receiving a fourth input to store the layout adjusted by identify the second input or the third input, the lock screen having the stored layout based on a state of at least one processor being switched to a specified state for displaying the lock screen, on the display.

For example, at least one processor individually or collectively, may be configured to cause the electronic device to: determine a position at which the widget is to be displayed using color distribution of pixels included in a preview area of the edit screen among pixels of the second background image. At least one processor individually or collectively, may be configured to cause the electronic device to determine a color of the widget using color distribution of the pixels of the second background image corresponding to the determined position.

For example, the lock screen may be a first lock screen. At least one processor individually or collectively, may be configured to cause the electronic device to control, based on at least one processor being switched to a low power state, the display to display a second lock screen including the visual object region and the widget. Within the second lock screen, a portion different from the visual object region may be filled with a preset color.

For example, at least one processor individually or collectively, may be configured to cause the electronic device to control the display to deactivate one or more pixels corresponding to the portion different from the visual object region based on displaying the second lock screen to represent the specified color, the specified color being black.

For example, at least one processor individually or collectively, may be configured to cause the electronic device to move a position of the visual object region associated with a subject based on a reference position within the edit screen in response to the second input.

For example, at least one processor individually or collectively, may be configured to cause the electronic device to adjust a height of the visual object region to a specified height within a preview area in the edit screen of the lock screen in response to the second input.

In an example embodiment, a method of an electronic device including a display may be provided. The method may comprise receiving a first input for displaying an edit screen for editing a lock screen. The method may comprise concurrently displaying a first background image of the lock screen and a widget object corresponding to a widget of the lock screen within the edit screen displayed in response to the first input. The first background image may include a visual object region obtained using a source image. The widget object may be at least partially superimposed on the first background image. The method may comprise receiving a second input for moving the widget object via the edit screen while concurrently displaying the first background image and the widget object. The method may comprise, in response to releasing the second input corresponding to the widget object moved to at least partially superimposed on the visual object region included in the first background image, editing the lock screen configured to obtain a second background image using the source image such that the visual object region is positioned away from the widget object moved by the second input. The second background image may be displayed with the widget moved according to the second input within the lock screen. The method may comprise, in response to releasing the second input corresponding to the widget object moved to a location spaced apart from the visual object region included in the first background image, editing the lock screen using the first background image to be displayed in the lock screen with the widget moved according to the second input.

For example, the first background image may correspond to a first cropped portion of the source image and the second background image may correspond to a second cropped portion of the source image.

For example, a size and/or position of the first cropped portion associated with the source image may be different from a size and/or position of the second cropped portion associated with the source image.

For example, the method may comprise receiving a third input for adjusting a position of the first background image received via the edit screen. The method may comprise, based on the visual object region included in the first background image moved by the third input to be superimposed on the widget object, editing the lock screen for obtaining a third background image using the source image such that the visual object region is positioned away from the widget object moved by the third input.

For example, the method may comprise, based on receiving a fourth input for storing the layout adjusted by the second input or the third input, displaying the lock screen having the stored layout based on a state of at least one processor of the electronic device being switched to a specified state for displaying the lock screen, on the display.

For example, editing the lock screen for obtaining the second background image may comprise: determining a position at which the widget will be displayed using color distribution of pixels included in a preview area of the edit screen among pixels of the second background image. For example, editing the lock screen for obtaining the second background image may comprise determining a color of the widget using color distribution of the pixels of the second background image corresponding to the determined position.

For example, the lock screen may be a first lock screen. For example, the method may comprise: based on at least one processor of the electronic device being switched to a low power state, controlling the display to display a second lock screen including the visual object region and the widget. Within the second lock screen, another portion for the image different from the visual object region may be filled with a preset color.

For example, controlling the display to display the second lock screen may comprise, based on displaying the second lock screen to represent the specified color, the specified color being black, controlling the display to deactivate one or more pixels corresponding to the portion different from the visual object region.

For example, editing the lock screen for obtaining the second background image may comprise, in response to the second input, moving a position of the visual object region associated with a subject based on a reference position within the edit screen.

For example, editing the lock screen for obtaining the second background image may comprise, in response to the second input, adjusting a height of the visual object region to a specified height within a preview area in the edit screen of the lock screen.

In an example embodiment, a non-transitory computer-readable storage medium storing instructions may be provided. The instructions, when executed by at least one processor, comprising processing circuitry, of an electronic device including a display, individually and/or collectively, may cause the electronic device to: receive a first input for displaying an edit screen for editing a lock screen. The instructions, when executed by at least one processor, may cause the electronic device to concurrently display, in the edit screen displayed in response to the first input, a first background image of the lock screen and a widget object corresponding to a widget of the lock screen. The first background image may include a visual object region obtained using a source image. The widget object may be at least partially superimposed on the first background image. The instructions, when executed by at least one processor, may cause the electronic device to receive, while concurrently displaying the first background image and the widget object, via the edit screen, a second input for moving the widget object. The instructions, when executed by at least one processor, may cause the electronic device to edit, in response to releasing the second input corresponding to the widget object moved to at least partially superimposed on the visual object region included in the first background image, the lock screen for obtaining a second background image using the source image such that the visual object region is positioned away from the widget object moved by the second input. The second background image may be displayed in the lock screen, with the widget moved according to the second input. The instructions, when executed by at least one processor, may cause the electronic device to edit, in response to releasing the second input corresponding to the widget object moved to a location spaced apart from the visual object region included in the first background image, the lock screen using the first background image to be displayed in the lock screen with the widget moved according to the second input.

As used herein, the term "if" is, optionally, construed as "when" or "upon" or "in response to determining" or "in response to detecting," depending on the context. Similarly, the phrase "if it is determined" or "if [a stated condition or event] is detected" is, optionally, construed as "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the disclosure may be implemented using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the disclosure may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although various example embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

While the disclosure has been illustrated and described with reference to various example embodiments, it will be understood that the various example embodiments are intended to be illustrative, not limiting. It will be further understood by those skilled in the art that various changes in form and detail may be made without departing from full scope of the disclosure, including the appended claims and their equivalents. It will also be understood that any of the embodiment(s) described herein may be used in conjunction with any other embodiment(s) described herein.

## Claims

1. An electronic device comprising:
a display;
at least one processor comprising processing circuitry; and
memory, comprising one or more storage media, storing instructions,
wherein at least one processor individually or collectively, is configured to execute the instructions and to cause the electronic device to:
receive a first input for displaying an edit screen for editing a lock screen,
concurrently display in the edit screen displayed in response to the first input:
a first background image of the lock screen, wherein the first background image includes a visual object region obtained using a source image,
a widget object corresponding to a widget of the lock screen, wherein the widget object is at least partially superimposed on the first background image,
while concurrently displaying the first background image and the widget object, receive, via the edit screen, a second input for moving the widget object,
in response to releasing the second input corresponding to the widget object moved to at least partially superimposed on the visual object region included in the first background image, edit the lock screen configured to obtain a second background image using the source image such that the visual object region is positioned away from the widget object moved by the second input, wherein the second background image is configured to be displayed in the lock screen, with the widget moved according to the second input, and
in response to releasing the second input corresponding to the widget object moved to a location spaced apart from the visual object region included in the first background image, edit the lock screen using the first background image to be displayed in the lock screen with the widget moved according to the second input.

2. The electronic device of claim 1, wherein the first background image corresponds to a first cropped portion of the source image and the second background image corresponds to a second cropped portion of the source image.

3. The electronic device of claim 2, wherein a size and/or a location of the first cropped portion in relation to the source image is different from a size and/or a location of the second cropped portion in relation to the source image.

4. The electronic device of claim 1, wherein at least one processor individually or collectively, is configured to cause the electronic device to:
receive a third input to adjust a position of the first background image received via the edit screen,
based on the visual object region included in the first background image being moved by the third input to be superimposed on the widget object, edit the lock screen configured to obtain a third background image using the source image such that the visual object region is positioned away from the widget object moved by the third input.

5. The electronic device of claim 4, wherein at least one processor individually or collectively, is configured to cause the electronic device to:
based on receiving a fourth input to store the layout adjusted by the second input or the third input, display the lock screen having the stored layout based on a state of at least one processor being switched to a specified state for displaying the lock screen, on the display.

6. The electronic device of claim 1, wherein at least one processor individually or collectively, is configured to cause the electronic device to:
determine a position at which the widget is to be displayed using color distribution of pixels included in a preview area of the edit screen among pixels of the second background image;
determine a color of the widget using color distribution of the pixels of the second background image corresponding to the determined position.

7. The electronic device of claim 1, wherein the lock screen includes a first lock screen,
wherein at least one processor individually or collectively, is configured to cause the electronic device to:
based on at least one processor being switched to a sleep state, control the display to display a second lock screen including the visual object region and the widget,
wherein a portion within the second lock screen different from the visual object region is filled with a specified color.

8. The electronic device of claim 1, wherein at least one processor individually or collectively, is configured to cause the electronic device to:
control the display to deactivate one or more pixels corresponding to the portion different from the visual object region based on displaying the second lock screen to represent the specified color, the specified color being black.

9. The electronic device of claim 1, wherein at least one processor individually or collectively, is configured to cause the electronic device to:
in response to the second input, move a position of the visual object region associated with a subject based on a reference position within the edit screen.

10. The electronic device of claim 1, wherein at least one processor individually or collectively, is configured to cause the electronic device to:
in response to the second input, adjust a height of the visual object region to a specified height within a preview area in the edit screen of the lock screen.

11. A method of an electronic device comprising a display, comprising:
receiving a first input for displaying an edit screen for editing a lock screen,
concurrently displaying in the edit screen displayed in response to the first input:
a first background image of the lock screen, wherein the first background image includes a visual object region obtained using a source image,
a widget object corresponding to a widget of the lock screen, wherein the widget object is at least partially superimposed on the first background image,
while concurrently displaying the first background image and the widget object, receiving, via the edit screen, a second input for moving the widget object,
in response to releasing the second input corresponding to the widget object moved to at least partially superimposed on the visual object region included in the first background image, editing the lock screen configured to obtain a second background image using the source image such that the visual object region is positioned away from the widget object moved by the second input, wherein the second background image is configured to be displayed in the lock screen, with the widget moved according to the second input, and
in response to releasing the second input corresponding to the widget object moved to a location spaced apart from the visual object region included in the first background image, editing the lock screen using the first background image configured to be displayed in the lock screen with the widget moved according to the second input.

12. The method of claim 11, wherein the first background image corresponds to a first cropped portion of the source image and the second background image corresponds to a second cropped portion of the source image.

13. The electronic device of claim 11, wherein a size and/or a location of the first cropped portion in relation to the source image is different from a size and/or a location of the second cropped portion in relation to the source image.

14. The method of claim 11, further comprises:
receiving, a third input to adjust a position of the first background image received via the edit screen,
based on the visual object region included in the first background image moved by the third input to be superimposed on the widget object, editing the lock screen configured to obtain a third background image using the source image such that the visual object region is positioned away from the widget object moved by the third input.

15. The method of claim 11, further comprising:
based on receiving a fourth input to store the layout adjusted by the second input or the third input, displaying the lock screen having the stored layout based on a state of at least one processor of the electronic device being switched to a specified state for displaying the lock screen, on the display.
